(19) Europäisches Patentamt
European Patent Office
Office européen des brevets

(11) EP 3 950 381 B1

(12) EUROPEAN PATENT SPECIFICATION

(45) Date of publication and mention of the grant of the patent:
**13.09.2023 Bulletin 2023/37**

(21) Application number: **21184066.5**

(22) Date of filing: **06.07.2021**

(51) International Patent Classification (IPC):
***B60C 1/00*** *(2006.01)* ***B60C 11/00*** *(2006.01)*
***C08L 21/00*** *(2006.01)*

(52) Cooperative Patent Classification (CPC):
**B60C 11/005; B60C 1/0016; C08C 19/22; C08C 19/25; C08F 236/10; C08L 9/06; C08L 21/00;**
B60C 2011/0025; B60C 2011/0033

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2020 JP 2020132684**
**30.11.2020 JP 2020198505**

(43) Date of publication of application:
**09.02.2022 Bulletin 2022/06**

(73) Proprietor: **SUMITOMO RUBBER INDUSTRIES LIMITED**
**Kobe-shi**
**Hyogo-ken (JP)**

(72) Inventor: **NAKATANI, Masako**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 698 262** **EP-A1- 2 781 373**
**EP-A1- 3 181 376** **EP-A1- 3 300 923**
**JP-A- 2005 035 404** **JP-A- 2016 037 263**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

**Description**

TECHNICAL FIELD

The present invention relates to a tire.

BACKGROUND OF THE INVENTION

JP 3213127 B describes that steering stability and fuel efficiency of a tire are improved by forming tread parts into a two-layer structure of a base rubber located inside in a tire radial direction and a cap rubber located outside in the tire radial direction (so-called a cap/base structure) and applying a rubber composition with a small loss tangent tan δ to the base rubber.
EP 2 698 262 A1 discloses a pneumatic tire capable of improving fuel efficiency, handling stability, and durability in a balanced manner, wherein the tread comprising at least a first layer constituting a tread surface and a second layer adjacent to inside in a tire radial direction of the first layer, wherein the tread has land parts partitioned by a plurality of circumferential grooves extending continuously in a tire circumferential direction, wherein each of the first layer and the second layer is composed of a rubber composition comprising a rubber component and a plasticizer; an example tire has a ratio of the complex elastic modulus of the first layer at 30°C to the complex elastic modulus of the second layer at 30°C of 0.93, a ratio of the tan δ of the first layer at 30°C to the tan δ of the second layer at 30°C of 1.5 and a complex elastic modulus of the first layer at 30°C of 6.5 MPa.
JP 2005035404 A1 discloses a heavy-duty pneumatic tire that is excellent in wear resistance and structural durability and that can suppress a cut that tends to occur from the middle to the end of wear. JP 2016037263 A discloses a pneumatic tire for heavy loads.
EP 3 181 376 A1 discloses a heavy duty pneumatic tire that allows reduction in rolling resistance to be achieved while allowing influence on various performances to be suppressed.
EP 2 781 373 A1 discloses a pneumatic tire comprising a tread portion provided with a pair of crown main grooves and a pair shoulder main grooves to divide middle portions and shoulder portions.
EP 3 300 923 A1 discloses a pneumatic tire including: a two-layer tread including a base tread and a cap tread, the base tread being formed of a rubber composition for base treads.

SUMMARY OF THE INVENTION

Since the tire as described above has a high loss tangent tan δ of a cap rubber layer, wet grip performance at the time of the tire being a new article is high. However, there are concerns that, as running continues, the cap rubber layer may undergo thermal deterioration due to an effect of self-heat generation and become harder, as well as a volume of groove may become smaller, rigidity of a tread grounding surface may become higher, followability to a road surface may be lost, and the wet grip performance may deteriorate.
An object of the present invention is to provide a tire having an improved overall performance of fuel efficiency, wet grip performance at the time of the tire being a new article, and wet grip performance after abrasion.
As a result of intensive studies, the present inventor has found that the above-described problems can be solved by providing two or more rubber layers in a tread part and setting a complex elastic modulus E* and a loss tangent tan δ of the rubber layers to a predetermined relationship, and completed the present invention.
That is, the present invention relates to:

[1] A tire having a tread comprising at least a first layer constituting a tread surface and a second layer adjacent to inside in a tire radial direction of the first layer, wherein the tread has land parts partitioned by a plurality of circumferential grooves extending continuously in a tire circumferential direction, wherein each of the first layer and the second layer is composed of a rubber composition comprising a rubber component and a plasticizer, wherein a ratio of a complex elastic modulus of the first layer at 30°C to a complex elastic modulus of the second layer at 30°C is 0.85 or more, wherein a ratio of a tan δ of the first layer at 30°C to a tan δ of the second layer at 30°C is 1.0 or more, wherein the complex elastic modulus at 30°C of the first layer is 10 MPa or more, and wherein the complex elastic modulus and the tan δ is measured under a condition of a temperature at 30°C, an initial strain of 10%, a dynamic strain of 1%, and a frequency of 10 Hz,
[2] The tire of the above [1], wherein the ratio of the tan δ of the first layer at 30°C to the tan δ of the second layer at 30°C is 1.2 or more,
[3] The tire of the above [1] or [2], wherein the ratio of the tan δ of the first layer at 30°C to the tan δ of the second layer at 30°C is 1.4 to 2.0,
[4] The tire of any one of the above [1] to [3] e, wherein a content of a butadiene rubber in the rubber component

constituting the first layer is 35% by mass or less,

[5] The tire of any one of the above [1] to [4], wherein a difference between an acetone extraction amount $AE_1$ in the rubber composition constituting the first layer and an acetone extraction amount $AE_2$ in the rubber composition constituting the second layer $|AE_1-AE_2|$ is 10% by mass or less,

[6] The tire of any one of the above [1] to [5], wherein each of the rubber composition constituting the first layer and the rubber composition constituting the second layer comprises a resin component,

[7] The tire of any one of the above [1] to [6], wherein at least one of the rubber composition constituting the first layer and the rubber composition constituting the second layer comprises an aromatic-based petroleum resin,

[8] The tire of any one of the above [1] to [7], wherein a ratio of a content of the resin component based on 100 parts by mass of the rubber component in the rubber composition constituting the second layer to a content of the resin component based on 100 parts by mass of the rubber component in the rubber composition constituting the first layer is 2.4 or less,

[9] The tire of any one of the above [1] to [8], comprising a third layer adjacent to inside in a tire radial direction of the second layer,

[10] The tire of any one of the above [1] to [9], wherein a ratio of a thickness of the first layer to a total thickness of the first layer and the second layer is 0.40 or more,

[11] The tire of any one of the above [1] to [10], wherein the complex elastic modulus of the second layer at 30°C is 5 MPa or more,

[12] The tire of any one of the above [1] to [11], wherein the tan $\delta$ of the second layer at 30°C is 0.30 or less,

[13] The tire of any one of the above [1] to [12], wherein a glass transition temperature of the first layer is -15°C or higher,

[14] The tire of any one of the above [1] to [13], wherein a shore hardness (Hs) of the second layer measured at a temperature of 23°C using a durometer type A in accordance with JIS K 6253-3: 2012 is 50 to 80,

[15] The tire of any one of the above [1] to [14], wherein a modulus of the first layer at 100% stretching is larger than that of the second layer at 100% stretching,

[16] The tire of any one of the above [1] to [15], wherein a deepest part of a groove bottom of any one of the circumferential grooves is formed so as to be located inside in a tire radial direction with respect to an outermost part of the second layer in the land part adjacent to the circumferential groove,

[17] The tire of any one of the above [1] to [16], wherein the land part has a sipe having both ends not opened in the circumferential groove,

[18] The tire of any one of the above [1] to [17], having a portion where a length in a width direction of the land part closest to an equatorial plane of the tire increases from outside to inside in the tire radial direction.

According to the present invention, provided is a tire having an improved overall performance of fuel efficiency, wet grip performance at the time of the tire being a new article, and wet grip performance after abrasion.

BRIEF DESCRIPTION OF THE DRAWINGS

FIG. 1 is an enlarged cross-sectional view showing a part of a tread of a tire according to one embodiment of the present invention.

FIG. 2 is an enlarged cross-sectional view showing a part of a tread of a tire according to one embodiment of the present invention.

FIG. 3 is an enlarged cross-sectional view showing a part of a tread of a tire according to one embodiment of the present invention.

FIG. 4 is an enlarged cross-sectional view showing a part of a tread of a tire according to one embodiment of the present invention.

FIG. 5 is an enlarged cross-sectional view showing a part of a tread of a tire according to one embodiment of the present invention.

FIG. 6 is an enlarged cross-sectional view showing a part of a tread of a tire according to one embodiment of the present invention.

FIG. 7 is a schematic view of a grounding surface of a tire when a tread is pressed against a flat surface.

FIG. 8 is a schematic view of a grounding surface of a tire when a tread is pressed against a flat surface.

DETAILED DESCRIPTION

The tire of one embodiment of the present invention is a tire having a tread comprising at least a first layer constituting a tread surface and a second layer adjacent to inside in a tire radial direction of the first layer, wherein the

tread has land parts partitioned by a plurality of circumferential grooves extending continuously in a tire circumferential direction, wherein each of the first layer and the second layer is composed of a rubber composition comprising a rubber component and a plasticizer, wherein a ratio of a complex elastic modulus of the first layer at 30°C to a complex elastic modulus of the second layer at 30°C is 0.85 or more, wherein a ratio of a tan δ of the first layer at 30°C to a tan δ of the second layer at 30°C is 1.0 or more (preferably 1.2 or more, more preferably 1.4 to 2.0), wherein the complex elastic modulus at 30°C of the first layer is 10 MPa or more, and wherein the complex elastic modulus and the tan δ is measured under a condition of a temperature at 30°C, an initial strain of 10%, a dynamic strain of 1%, and a frequency of 10 Hz.

Although it is not intended to be bound by theory, in the present invention, the following can be considered as a mechanism that may suppress a decrease in wet grip performance after tire abrasion.

In the tread of the present invention, when the ratio of the complex elastic modulus of the first layer at 30°C to the complex elastic modulus of the second layer at 30°C is 0.85 or more and less than 1.00, it is indicated that the first layer is in a soft state at the time of the tire being a new article. Then, at the time of braking, since the first layer easily follows a road surface and has a large amount of deformation, and the tan δ at 30°C is also larger than that of the second layer, a good wet grip performance can be obtained at the time of the tire being a new article, as well as motility inside the first layer becomes increased, and a plasticizer is easily moved from the first layer to the second layer. Thereby, when the second layer is exposed, the second layer is also in a soft state, so that it is considered that a good followability can be obtained even if a tread capacity is reduced, and a good wet grip performance can be obtained even at the time of abrasion.

When the ratio of the complex elastic modulus of the first layer at 30°C to the complex elastic modulus of the second layer at 30°C is 1.00 or more, it is considered that heat is generated between the first layer and the road surface, while the entire land part moves so as to be bent as the second layer being centered at the time of braking, so that wet grip performance can be obtained. Moreover, when the second layer is exposed, the second layer is in a soft state, so that a good followability can be obtained even if the tread volume is reduced, and a good wet grip performance can be obtained even at the time of abrasion.

On the other hand, when the ratio of the complex elastic modulus of the first layer at 30°C to the complex elastic modulus of the second layer at 30°C is less than 0.85, it is considered that the first layer becomes too soft compared with the second layer, and thus, in the land part, the amount of deformation of the first layer becomes too large, causing chunking from a part that cannot withstand the deformation, and decreasing a contact area early at the time of the tire being a new article, and therefore a good wet grip performance cannot be obtained. Moreover, since transfer of the plasticizer into the second layer is not sufficient, it is considered that the wet grip performance at the time of abrasion is not sufficient.

In the tire of the present invention, it is preferable that the deepest part of the groove bottom of any one of the circumferential grooves is formed so as to be located inside in the tire radial direction with respect to the outermost part of the second layer in the land part adjacent to the circumferential groove.

It is preferable that the land part has a sipe having both ends not opened in the circumferential groove.

It is preferable that the tire of the present invention has a portion where a length in a width direction of the land part closest to an equatorial plane of the tire increases from outside to inside in the tire radial direction.

The tire which is one embodiment of the present invention will be described in detail below. However, the following descriptions are illustrative for explaining the present invention, and are not intended to limit the technical scope of the present invention to this description range only. Besides, in the present specification, a numerical range identified with "to" means to include the numerical values of both ends.

Each of FIGS. 1 to 6 is an enlarged cross-sectional view showing a part of a tread of a tire. In FIGS. 1 to 6, a vertical direction is a tire radial direction, a horizontal direction is a tire width direction, and a direction perpendicular to a paper surface is a tire circumferential direction.

As shown in the figures, the tread part of the tire of the present invention comprises a first rubber layer 6 and a second rubber layer 7 and may have a third rubber layer 8 (hereinafter, simply referred to as a "first layer 6", a "second layer 7", and a "third layer 8"), and an outer surface of the first layer 6 constitutes a tread surface 3, the second layer 7 is adjacent to inside in a tire radial direction of the first layer 6, and the third layer 8 is adjacent to inside in a tire radial direction of the second layer 7. The first layer 6 typically corresponds to a cap tread. The third layer 8 typically corresponds to a base tread or under tread. Since a typical shape of the second layer 7 has not been determined, the second layer 7 may be a base tread or under tread. Moreover, as long as the object of the present invention is achieved, one or more rubber layers may be further provided between the third layer 8 and a belt layer. In FIGS. 1, 2, 3, and 6, a tread is composed of the first layer 6, the second layer 7, and the third layer 8, and in FIGS. 4 and 5, a tread is composed of the first layer 6 and the second layer 7.

In FIGS. 1 to 6, a double-headed arrow t1 is a maximum thickness of the first layer 6, a double-headed arrow t2 is a maximum thickness of the second layer 7, and a double-headed arrow t3 is a maximum thickness of the third layer 8. In FIGS. 1 to 6, any point on a tread surface where a groove is not formed is represented as a symbol P. A straight line represented by a symbol N is a straight line (a normal line) that passes through the point P and is perpendicular

to a tangent plane at this point P. In the present specification, the thicknesses t1, t2, and t3 are measured along the normal line N drawn from the point P on the tread surface at a position where a groove does not exist, in the cross sections of FIGS. 1 to 6.

In the present invention, the maximum thickness t1 of the first layer 6 is, but not particularly limited to, preferably 1.0 mm or more, more preferably 1.5 mm or more, further preferably 2.0 mm or more, from the viewpoint of wet grip performance. On the other hand, the maximum thickness t1 of the first layer 6 is preferably 7.0 mm or less, more preferably 6.5 mm or less, further preferably 6.0 mm or less, from the viewpoint of heat generation.

In the present invention, the maximum thickness t2 of the second layer 7 is, but not particularly limited to, preferably 1.0 mm or more, more preferably 1.5 mm or more. Moreover, the maximum thickness t2 of the second layer 7 is preferably 10.0 mm or less, more preferably 9.0 mm or less, further preferably 8.0 mm or less.

In the present invention, the maximum thickness t3 of the third layer 8 is, but not particularly limited to, preferably 1.0 mm or more, more preferably 1.5 mm or more, further preferably 2.0 mm or more. Moreover, the maximum thickness t3 of the third layer 8 is preferably 10.0 mm or less, more preferably 9.0 mm or less, further preferably 8.0 mm or less.

A ratio of a thickness of the second layer 7 to a total thickness of the first layer 6 and the second layer 7 ($t2/(t1+t2)$) is preferably 0.30 or more, more preferably 0.40 or more, further preferably 0.45 or more, from the viewpoint of effects of the present invention.

The tread of the present invention has a land part 2 partitioned by a circumferential groove 1 in a tire width direction.

A groove depth H1 of the circumferential groove 1 can be calculated by a distance between an extension line 4 of the land part 2 and an extension line 5 of a deepest part of a groove bottom of the circumferential groove 1. Besides, the groove depth H1 can be, for example, when there are a plurality of circumferential grooves 1, a distance between the extension line 4 of the land part 2 and the extension line 5 of the deepest part of the groove bottom of the circumferential groove 1 having the deepest groove depth among the plurality of circumferential grooves 1.

In FIGS. 1 and 2, the deepest part of the groove bottom of the circumferential groove 1 having the deepest groove depth among the plurality of circumferential grooves 1 is formed so as to be located inside in the tire radial direction with respect to the outermost part of the third layer 8 in the land part 2 adjacent to the circumferential groove. That is, the extension line 5 of the deepest part of the groove bottom of the circumferential groove 1 having the deepest groove depth among the plurality of circumferential grooves 1 is located inside in the tire radial direction with respect to an extension line 10 of the outermost part of the third layer 8 in the land part 2 adjacent to the circumferential groove. Immediately below the circumferential groove 1 having the deepest groove depth among the plurality of circumferential grooves 1 (inside in the tire radial direction), a recess part recessed inside in the tire radial direction with respect to the outermost part of the third layer 8 in the land part 2 adjacent to the circumferential groove is provided, where a part of the first layer 6 and the second layer 7 with a predetermined thickness is formed in the recess part of the third layer 8.

In FIGS. 3 and 6, the deepest part of the groove bottom of the circumferential groove 1 having the deepest groove depth among the plurality of circumferential grooves 1 is formed so as to be located inside in the tire radial direction with respect to the outermost part of the second layer 7 in the land part 2 adjacent to the circumferential groove. That is, the extension line 5 of the deepest part of the groove bottom of the circumferential groove 1 having the deepest groove depth among the plurality of circumferential grooves 1 is located inside in the tire radial direction with respect to an extension line 9 of the outermost part of the second layer 7 in the land part 2 adjacent to the circumferential groove. Immediately below the circumferential groove 1 having the deepest groove depth among the plurality of circumferential grooves 1 (inside in the tire radial direction), a recess part recessed inside in the tire radial direction with respect to the outermost part of the second layer 7 in the land part 2 adjacent to the circumferential groove is provided, where a part of the first layer 6 and the second layer 7 with a predetermined thickness is formed in the recessed part of the second layer 7.

When the first layer 6, the second layer 7, and the third layer 8 are formed as described above, a complex elastic modulus of the first layer 6 remaining around the circumferential groove 1 after tire abrasion is higher than that of the second layer 7, and thus it is considered that the tire becomes easy to function as an edge at the time of turning, and snow traction and the like become improved.

As shown in FIGS. 1 to 4, it is preferable that the tire of the present invention has a portion where a length in a width direction of at least one land part 2 increases from outside to inside in the tire radial direction, and it is more preferable that the length in the width direction of the land part 2 gradually increases from the outside to the inside in the tire radial direction. Because of such an aspect, a grounding area can be widened along with abrasion due to running, so that the wet grip performance can be maintained until the end of running. Besides, a groove wall of the circumferential groove 1 of the present invention extends linearly from the outside to the inside in the tire radial direction, though the present invention is not limited to such an embodiment, and the groove wall may extend in, for example, a curved shape or a stepped shape.

As shown in FIG. 1, in the tire of the present invention, at least one of the land parts 2 may have a third layer 8 formed asymmetrically with respect to the normal line N passing through the center in the tire width direction in a tire

meridian cross section including a tire rotation axis. By forming the third layer 8 asymmetrically, a hardness distribution of the land parts is biased, which affects a grounding pressure. In a portion where the grounding pressure is high, a part where a water film touches the ground without riding on it, and wet grip performance becomes increased, so that a difference between wet grip performance at the time of the tire being a new article and that at the time of abrasion can be made smaller. Such land part 2 having the asymmetrical third layer 8 may be a land part 2 located outside a vehicle when mounted thereon with respect to a tire equator, or may be a land part 2 located inside the vehicle when mounted thereon with respect to the tire equator. Moreover, the land part 2 having the asymmetrical third layer 8 may be a land part sandwiched between a plurality of circumferential grooves 1, or may be a shoulder land part sandwiched between the circumferential groove 1 and a tread ground contact end, though it is preferably a land part sandwiched between a plurality of circumferential grooves 1.

Each of FIGS. 7 and 8 shows a schematic view of a grounding surface when a tread is pressed against a flat surface. As shown in FIGS. 7 and 8, the tread 10 constituting the tire of the present invention has a circumferential groove 1 extending continuously in a tire circumferential direction C, a lateral groove 21 and sipes 22 and 23 extending in a width direction.

The tread has a plurality of circumferential grooves 1 extending continuously in the circumferential direction C. In FIGS. 7 and 8, three circumferential grooves 1 are provided, though the number of circumferential grooves is not particularly limited, and may be, for example, two to five. Moreover, in the present invention, although the circumferential groove 1 extends linearly along the circumferential direction C, it is not limited to such an embodiment, and may extend in, for example, a wavy shape, a sinusoidal shape, or a zigzag shape along the circumferential direction C.

The tread has land parts 2 partitioned by a plurality of circumferential grooves 1 in a tire width direction W. A shoulder land part 11 is a pair of land parts formed between the circumferential groove 1 and a tread end Te. A center land part 12 is a land part formed between a pair of shoulder land parts 11. In FIGS. 7 and 8, two center land parts 12 are provided, though the number of center land parts is not particularly limited, and may be, for example, one to five.

It is preferable that the land part 2 is provided with a lateral groove and / or sipes crossing the land part 2. Moreover, it is more preferable that the land part 2 has a sipe having both ends not opened in the circumferential groove 1. In FIG. 1, the shoulder land part 11 is provided with a plurality of shoulder lateral grooves 21 having a terminal end opened to the circumferential groove 1 and a plurality of shoulder sipes 22 having one end opened to the circumferential groove 1, and the center land part 12 is provided with a plurality of center sipes 23 having one end opened to the circumferential groove 1. In FIG. 2, the shoulder land part 11 is provided with a plurality of shoulder lateral grooves 21 having a terminal end opened to the circumferential groove 1 and a plurality of shoulder sipes 22 having both ends not opened to the circumferential groove 1, and the center land part 12 is provided with a plurality of center sipes 23 having one end opened to the circumferential groove 1.

Besides, in the present specification, a "groove" including the circumferential groove and the lateral groove refers to a recess having a width at least larger than 2.0 mm. On the other hand, in the present specification, a "sipe" refers to a narrow notch having a width of 2.0 mm or less, preferably 0.5 to 2.0 mm.

In the present invention, unless otherwise specified, a dimension of each member of the tire is measured in a state where the tire is incorporated into a normal rim and is filled with air so as to have a normal internal pressure. At the time of measurement, no load is applied to the tire.

A "normal rim" is a rim defined for each tire in a standard system including standards, on which the tire is based, by the standard, i.e., a "standard rim" for JATMA, "Design Rim" for TRA, or "Measuring Rim" for ETRTO. Besides, if a size of the tire is not specified in the above-described standard system, a rim can be assembled to the tire, and the rim refers to a narrowest rim among rims having the smallest diameter that does not cause air leakage between the rim and the tire.

A "normal internal pressure" is an air pressure defined for each tire in the standard system including standards on, which the tire is based, by each standard, i.e., a "maximum air pressure" for JATMA, a maximum value described in Table "TIRE LOAD LIMITS AT VARIOUS COLD INFLATION PRESSURES" for TRA, or "INFLATION PRESSURE" for ETRTO. Besides, if a size of the tire is not specified in the above-described standard system, the normal internal pressure shall be 250 kPa.

"30°C E*" in the present invention refers to a complex elastic modulus E* under a condition of a temperature at 30°C, an initial strain of 10%, a dynamic strain of 1%, and a frequency of 10 Hz. 30°C E* of the first layer 6 is 10 MPa or more, from the viewpoint of steering stability. 30°C E* of the second layer 7 is preferably 4 MPa or more, more preferably 5 MPa or more, further preferably 6 MPa or more, from the viewpoint of steering stability. 30°C E* of the third layer 8 is preferably 4 MPa or more, more preferably 5 MPa or more, further preferably 6 MPa or more. On the other hand, each 30°C E* of the first layer 6, the second layer 7, and the third layer 8 is preferably 25 MPa or less, more preferably 20 MPa or less, further preferably 18 MPa or less, from the viewpoint of wet grip performance. In the present invention, a ratio of 30°C E* of the first layer 6 to 30°C E* of the second layer 7 is 0.85 or more, preferably 1.0 or more, more preferably 1.1 or more, further preferably 1.2 or more, further preferably 1.3 or more, particularly preferably 1.4 or more. When the ratio of 30°C E* of the first layer 6 to 30°C E* of the second layer 7 is 0.85 or more and less than 1.00,

a good wet grip performance can be obtained at the time of the tire being a new article, and at the same time, motility inside the first layer 6 becomes higher, making the plasticizer easy to be transferred from the first layer 6 to the second layer 7. Thereby, when the second layer 7 is exposed, the second layer 7 is also in a soft state, so that it is considered that a good followability can be obtained even if the tread capacity is reduced, and a good wet grip performance can be obtained even at the time of abrasion. When a ratio of the complex elastic modulus of the first layer 6 at 30°C to the complex elastic modulus of the second layer 7 at 30°C is 1.00 or more, it is considered that heat is generated between the first layer 6 and the road surface, while the entire land part moves so as to be bent as the second layer 7 being centered at the time of braking, so that wet grip performance can be obtained. Moreover, when the second layer 7 is exposed, the second layer 7 is in a soft state, so that a good followability can be obtained even if the tread volume is reduced, and a good wet grip performance can be obtained even at the time of abrasion. Furthermore, an upper limit of the ratio of 30°C E* of the first layer 6 to 30°C E* of the second layer 7 is, but not particularly limited to, preferably 3.0 or less, more preferably 2.5 or less, further preferably 2.2 or less, particularly preferably 2.0 or less. Besides, 30°C E* of each rubber layer can be appropriately adjusted depending on types and compounding amounts of a rubber component, a filler, a plasticizer, and the like (particularly a plasticizer) which will be described later.

"30°C tan $\delta$" in the present invention refers to a loss tangent tan $\delta$ under a condition of a temperature at 30°C, an initial strain of 10%, a dynamic strain of 1%, and a frequency of 10 Hz. 30°C tan $\delta$ of the first layer 6 is preferably 0.18 or more, more preferably 0.20 or more, further preferably 0.22 or more, particularly preferably 0.24 or more, from the viewpoint of wet grip performance. 30°C tan $\delta$ of the second layer 7 is preferably 0.10 or more, more preferably 0.12 or more, further preferably 0.14 or more. 30°C tan $\delta$ of the third layer 8 is preferably 0.10 or more, more preferably 0.12 or more, further preferably 0.14 or more. On the other hand, each 30°C tan $\delta$ of the first layer 6, the second layer 7, and the third layer 8 is preferably 0.40 or less, more preferably 0.35 or less, further preferably 0.30 or less, from the viewpoint of fuel efficiency. In the present invention, a ratio of 30°C tan $\delta$ of the first layer 6 to 30°C tan $\delta$ of the second layer 7 is 1.0 or more, preferably 1.1 or more, more preferably 1.2 or more, further preferably 1.3 or more, particularly preferably 1.4 or more. When the ratio of 30°C tan $\delta$ of the first layer 6 to 30°C tan $\delta$ of the second layer 7 is 1.0 or more, it is considered that heat generation in the first layer becomes larger during running, and a good wet grip performance can be obtained, as well as, when the complex elastic modulus E* of the first layer is smaller than the complex elastic modulus E* of the second layer, motility inside the first layer becomes higher, and an effect of transferring the plasticizer to the second layer can be obtained. Moreover, an upper limit of the ratio of 30°C tan $\delta$ of the first layer 6 to 30°C tan $\delta$ of the second layer 7 is, but not particularly limited to, preferably 2.5 or less, more preferably 2.2 or less, further preferably 2.0 or less, particularly preferably 1.8 or less. Besides, 30°C tan $\delta$ of each rubber layer can be appropriately adjusted depending on types and compounding amounts of a rubber component, a filler, a plasticizer, and the like (particularly a plasticizer) which will be described later.

An acetone extraction amount in the present invention may be used as an index of concentration of an organic low molecular compound in a plasticizer contained in a vulcanized rubber composition. An acetone extraction amount can be calculated by the following equation by immersing each vulcanized rubber test piece in acetone for 24 hours to extract a soluble component and measuring a mass of each test piece before and after extraction in accordance with JIS K 6229-3: 2015.

Acetone extraction amount (% by mass) = {(mass of rubber test piece before extraction - mass of rubber test piece after extraction) / (mass of rubber test piece before extraction)} $\times$ 100

A difference between an acetone extraction amount $AE_1$ of the rubber composition constituting the first layer 6 and an acetone extraction amount $AE_2$ of the rubber composition constituting the second layer 7 $|AE_1-AE_2|$ is preferably 10% by mass or less, more preferably 8% by mass or less, further preferably 6% by mass or less, particularly preferably 4% by mass or less. When a difference in an acetone extraction amount is within the above-described ranges, it is considered that transfer of an acetone extraction component from the second layer 7 to the first layer 6 is suppressed during running, so that hardness of a tread rubber can be maintained even after abrasion, and the wet grip performance can be maintained for a long period of time. Besides, as long as a difference between $AE_1$ and $AE_2$ is within the above-described ranges, whichever value may be larger. Each of values of $AE_1$ and $AE_2$ is, but not particularly limited to, preferably 1 to 40% by mass, more preferably 5 to 30% by mass.

A glass transition temperature (Tg) in the present invention refers to a tan $\delta$ peak temperature measured by the following method. That is, for a rubber test piece (for example, length 20 mm $\times$ width 4 mm $\times$ thickness 1 mm) produced by being cut out from inside of a rubber layer of a tread part of each test tire so that a tire circumferential direction is on a long side, a temperature distribution curve of tan $\delta$ is measured under a condition of an initial strain of 10%, a dynamic strain of 1%, and a frequency of 10 Hz, using a dynamic viscoelasticity measuring device (for example, EPLEXOR series manufactured by gabo Systemtechnik GmbH), and a temperature corresponding to the largest tan $\delta$ value in the obtained temperature distribution curve (tan $\delta$ peak temperature) shall be defined as a glass transition temperature (Tg) in the present invention. A Tg of the first layer 6 is preferably -15°C or higher, more preferably -13°C or higher, further preferably -11°C or higher, from the viewpoint of wet grip performance. Moreover, a Tg of the second layer 7 is preferably -20°C. or higher, more preferably -15°C or higher, further preferably -12°C or higher, from the

viewpoint of wet grip performance. Besides, each of upper limits of the Tg of the first layer 6 and the Tg of the second layer 7 is, but not particularly limited to, preferably 20°C or lower, more preferably 15°C or lower, further preferably 10°C or lower. Besides, a Tg of each rubber layer can be appropriately adjusted depending on types and compounding amounts of the above-described rubber component and the like.

A rubber hardness in the present invention refers to a shore hardness (Hs) measured at a temperature of 23°C using a durometer type A in accordance with JIS K 6253-3: 2012. A shore hardness (Hs) of the first layer 6 is preferably 80 or less, more preferably 75 or less, further preferably 70 or less. Moreover, a shore hardness (Hs) of the second layer 7 is preferably 80 or less, more preferably 75 or less, further preferably 70 or less. When a shore hardness (Hs) of the first layer 6 and the second layer 7 is within the above-described ranges, it is considered that followability to a road surface becomes not compromised, and a reaction force becomes easily obtained, so that wet grip performance at the time of the tire being a new article becomes improved, and a sufficient followability becomes easily obtained even after abrasion, and thus deterioration of the wet grip performance after tire abrasion can be suppressed. On the other hand, a shore hardness (Hs) of the first layer 6 and a shore hardness (Hs) of the second layer 7 is preferably 50 or more, more preferably 55 or more, from the viewpoint of maintaining block rigidity of the tire. Besides, a rubber hardness of each rubber layer can be appropriately adjusted depending on types and compounding amounts of a rubber component, a filler, a plasticizer, and the like which will be described later.

A modulus at 100% stretching in the present invention refers to a tensile stress at 100% stretching in a columnar direction (a rolling direction when forming a rubber sheet by extrusion or shearing treatment) measured under a condition of a tensile speed of 3.3 mm/sec in an atmosphere of 23°C according to JIS K6251: 2017. A modulus of the first layer 6 at 100% stretching is preferably 1.0 MPa or more, more preferably 1.2 MPa or more, further preferably 1.4 MPa or more, particularly preferably 1.6 MPa or more. Moreover, a modulus of the second layer 7 at 100% stretching is preferably 1.0 MPa or more, more preferably 1.2 MPa or more, further preferably 1.4 MPa or more, particularly preferably 1.6 MPa or more. Besides, each of upper limits of the modulus of the first layer 6 and the modulus of the second layer 7 at 100% stretching is, but not particularly limited to, usually 4.0 MPa or less, preferably 3.5 MPa or less. In the present invention, it is preferable that the modulus of the first layer 6 at 100% stretching is larger than that of the second layer 7 at 100% stretching. A difference between the modulus of the second layer 7 at 100% stretching and the modulus of the first layer 6 at 100% stretching is preferably 0.1 MPa or more, more preferably 0.2 MPa or more, further preferably 0.3 MPa or more. Besides, a modulus of each rubber layer at 100% stretching can be appropriately adjusted depending on types and compounding amounts of a rubber component, a filler, a plasticizer, and the like which will be described later.

[Rubber composition]

The tire of the present invention can more effectively suppress deterioration of wet grip performance after tire abrasion by cooperation of the structures of the tire described above, particularly the shape of the tread, with the physical property of the rubber composition constituting each layer of the tread.

<Rubber component>

The rubber composition according to the present invention preferably comprises at least one selected from the group consisting of an isoprene-based rubber, a styrene-butadiene rubber (SBR), and a butadiene rubber (BR) as rubber components. Each rubber component constituting the first layer 6 and the second layer 7 preferably comprises a SBR, more preferably comprises a SBR and a BR, and may be a rubber component consisting only of a SBR and a BR. The rubber component constituting the third layer 8 preferably comprises an isoprene-based rubber, more preferably comprises an isoprene-based rubber and a BR, and may be a rubber component consisting only of an isoprene-based rubber and a BR.

(Isoprene-based rubber)

As an isoprene-based rubber, for example, those common in the tire industry can be used, such as an isoprene rubber (IR) and a natural rubber. Examples of the natural rubber includes a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone or two or more thereof may be used in combination.

The NR is not particularly limited, and those common in the tire industry can be used, examples of which include, for example, SIR20, RSS#3, TSR20, and the like.

When the rubber components constituting the first layer 6 and the second layer 7 comprises the isoprene-based rubber (preferably the natural rubber, more preferably the non-modified natural rubber (NR)), the content thereof is preferably 50% by mass or less, more preferably 40% by mass or less, further preferably 30% by mass or less,

particularly preferably 20% by mass or less, from the viewpoint of wet grip performance. On the other hand, a lower limit of the content of the isoprene-based rubber in the rubber components constituting the first layer 6 and the second layer 7 can be, but not particularly limited to, for example, 1% by mass or more, 3% by mass or more, 5% by mass or more, 10% by mass or more, or 15% by mass or more.

When the rubber component constituting the third layer 8 comprises the isoprene-based rubber (preferably the natural rubber, more preferably the non-modified natural rubber (NR)), the content thereof is preferably 20% by mass or more, more preferably 30% by mass or more, further preferably 40% by mass or more. Moreover, an upper limit of the content of the isoprene-based rubber in the rubber component constituting the third layer 8 is not particularly limited and may be 100% by mass.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated additives of these SBRs (hydrogenated SBRs) and the like can also be used. These SBRs may be used alone or two or more thereof may be used in combination.

Examples of the S-SBR that can be used in the present invention include S-SBRs manufactured and sold by JSR Corporation, Sumitomo Chemical Co., Ltd., Ube Industries, Ltd., Asahi Kasei Corporation, ZS Elastomer Co., Ltd., etc.

A styrene content of the SBR is preferably 10% by mass or more, more preferably 15% by mass or more, further preferably 20% by mass or more, from the viewpoints of wet grip performance and abrasion resistance. Moreover, it is preferably 60% by mass or less, more preferably 55% by mass or less, further preferably 50% by mass or less, from the viewpoints of temperature dependence of grip performance and blow resistance. Besides, in the present specification, the styrene content of the SBR is calculated by $^{1}H$-NMR measurement.

A vinyl content of the SBR is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, in the present specification, the vinyl content of the SBR (1,2-bond butadiene unit amount) is measured by infrared absorption spectrometry.

A weight-average molecular weight (Mw) of the SBR is preferably 200,000 or more, more preferably 250,000 or more, further preferably 300,000 or more, from the viewpoint of wet grip performance. Moreover, the weight-average molecular weight is preferably 2,000,000 or less, more preferably 1,800,000 or less, further preferably 1,500,000 or less, from the viewpoint of cross-linking uniformity. Besides, in the present specification, the weight-average molecular weight of the SBR can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

When the rubber components constituting the first layer 6 and the second layer 7 comprises the SBR, the content thereof is preferably 50% by mass or more, more preferably 60% by mass or more, further preferably 65% by mass or more, particularly preferably 70% by mass or more, from the viewpoint of wet grip performance. On the other hand, an upper limit of the content of the SBR in the rubber components constituting the first layer 6 and the second layer 7 is not particularly limited and may be 100% by mass. Besides, in the rubber component constituting the third layer 8, the content of the SBR when compounded in the rubber component is not particularly limited.

(BR)

The BR is not particularly limited, and those common in the tire industry can be used such as, for example, a BR having a cis content of less than 50% (a low cis BR), a BR having a cis content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). Examples of the modified BR include BRs modified with similar functional groups and the like as explained in the above-described SBR. These BRs may be used alone or two or more thereof may be used in combination.

As a high cis BR, for example, those commercially available from Zeon Corporation, Ube Industries, Ltd., JSR Corporation, etc. can be used. When the high cis BR is compounded, low temperature characteristics and abrasion resistance can be improved. The cis content is preferably 95% or more, more preferably 96% or more, further preferably

97% or more, particularly preferably 98% or more. Besides, in the present specification, the cis content (cis-1,4-bond butadiene unit amount) is a value calculated by infrared absorption spectrometry.

As a rare-earth-based BR, those which are synthesized using a rare-earth element-based catalyst, have a vinyl content of preferably 1.8 mol% or less, more preferably 1.0 mol% or less, further preferably 0.8% mol or less and a cis content of preferably 95% or more, more preferably 96% or more, further preferably 97% or more, particularly preferably 98% or more, can be used. As a rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such SPB-containing BR, those commercially available from Ube Industries, Ltd., etc. can be used.

As a modified BR, a modified butadiene rubber (a modified BR) modified at its terminal and/or main chain with a functional group comprising at least one element selected from the group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (a tin-modified BR), and the like. Moreover, the modified BR may be either non-hydrogenated or hydrogenated.

The BRs listed above may be used alone or two or more thereof may be used in combination.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoints of cross-linking uniformity, etc. Besides, the Mw can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation).

When the rubber components constituting the first layer 6 and the second layer 7 comprises the BR, the content thereof is preferably 50% by mass or less, more preferably 40% by mass or less, further preferably 30% by mass or less, particularly preferably 20% by mass or less, from the viewpoint of wet grip performance. On the other hand, a lower limit of the content of the BR in the rubber components constituting the first layer 6 and the second layer 7can be, but not particularly limited to, for example, 1% by mass or more, 3% by mass or more, 5% by mass or more, 10% by mass or more, or 15% by mass or more.

When the rubber component constituting the third layer 8 comprises the BR, the content thereof is preferably 80% by mass or less, more preferably 70% by mass or less, further preferably 65% by mass or less, particularly preferably 60% by mass or less. On the other hand, a lower limit of the content of the BR in the rubber component constituting the third layer 8 can be, but not particularly limited to, for example, 1% by mass or more, 3% by mass or more, 5% by mass or more, 10% by mass or more, or 15% by mass or more.

(Other rubber components)

As the rubber components according to the present invention, rubber components other than the above-described isoprene-based rubbers, SBRs, and BRs may be compounded. As other rubber components, cross-linkable rubber components commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydride nitrile rubber (HNBR), a butyl rubber (IIR), an ethylene propylene rubber, a polynorbornene rubber, a silicone rubber, a polyethylene chloride rubber, a fluororubber (FKM) , an acrylic rubber (ACM), a hydrin rubber, and the like. These other rubber components may be used alone, or two or more thereof may be used in combination.

(Filler)

For the rubber composition according to the present invention, a filler comprising carbon black and/or silica is appropriately used. The rubber compositions constituting the first layer 6 and the second layer 7 more preferably comprise silica as a filler, more preferably comprise carbon black and silica, and may be a filler consisting only of carbon black and silica. The rubber composition constituting the third layer 8 preferably comprises carbon black as a filler and may be a filler consisting only of carbon black.

(Carbon black)

As carbon black, those common in the tire industry can be appropriately used, examples of which include, for example, GPF, FEF, HAF, ISAF, SAF, and the like. These carbon black may be used alone or two or more thereof may

be used in combination.

A nitrogen adsorption specific surface area ($N_2SA$) of the carbon black is preferably 10 $m^2/g$ or more, more preferably 30 $m^2/g$ or more, further preferably 50 $m^2/g$ or more, from the viewpoint of reinforcing property. Moreover, it is preferably 200 $m^2/g$ or less, more preferably 150 $m^2/g$ or less, further preferably 125 $m^2/g$ or less, from the viewpoints of fuel efficiency and processability. Besides, the $N_2SA$ of carbon black is a value measured according to JIS K 6217-2: 2017 "Carbon black for rubber industry-Fundamental characteristics-Part 2: Determination of specific surface area-Nitrogen adsorption methods-Single-point procedures".

When the rubber compositions constituting the first layer 6 and the second layer 7 comprises the carbon black, the content thereof is, from the viewpoints of abrasion resistance and wet grip performance, preferably 1 part by mass or more, more preferably 3 parts by mass or more, further preferably 5 parts by mass or more based on 100 parts by mass of the rubber component. Moreover, it is preferably 50 parts by mass or less, more preferably 35 parts by mass or less, further preferably 20 parts by mass or less, particularly preferably 10 parts by mass or less, from the viewpoint of fuel efficiency.

When the rubber composition constituting the third layer 8 comprises the carbon black, the content thereof is, from the viewpoint of reinforcing property, preferably 30 parts by mass or more, more preferably 40 parts by mass or more, further preferably 50 parts by mass or more based on 100 parts by mass of the rubber component. Moreover, it is preferably 100 parts by mass or less, more preferably 90 parts by mass or less, further preferably 80 parts by mass or less, from the viewpoint of fuel efficiency.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone or two or more thereof may be used in combination.

A nitrogen adsorption specific surface area ($N_2SA$) of the silica is preferably 140 $m^2/g$ or more, more preferably 170 $m^2/g$ or more, further preferably 200 $m^2/g$ or more, from the viewpoints of fuel efficiency and abrasion resistance. Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica in the present specification is a value measured by a BET method according to ASTM D3037-93.

When the rubber compositions constituting the first layer 6 and the second layer 7 comprises the silica, the content thereof is, from the viewpoint of wet grip performance, preferably 20 parts by mass or more, more preferably 40 parts by mass or more, further preferably 50 parts by mass or more, particularly preferably 60 parts by mass or more based on 100 parts by mass of the rubber component. Moreover, it is preferably 130 parts by mass or less, more preferably 120 parts by mass or less, further preferably 110 parts by mass or less, from the viewpoint of abrasion resistance. Besides, a content of silica when compounded in the rubber composition constituting the third layer 8 based on 100 parts by mass of the rubber component is not particularly limited.

A total content of silica and carbon black in the rubber compositions constituting the first layer 6 and the second layer 7 is, from the viewpoint of abrasion resistance, preferably 40 parts by mass or more, more preferably 50 parts by mass or more, further preferably 60 parts by mass or more based on 100 parts by mass of the rubber component. Moreover, it is preferably 160 parts by mass or less, more preferably 140 parts by mass or less, further preferably 120 parts by mass or less, from the viewpoints of fuel efficiency and elongation at break.

In the rubber compositions constituting the first layer 6 and the second layer 7, it is preferable that the content of silica based on 100 parts by mass of the rubber component is larger than that of carbon black from the viewpoint of a balance of fuel efficiency, wet grip performance, and abrasion resistance. A ratio of a content of silica to a total content of silica and carbon black in the first layer 6 and the second layer 7 is preferably 60% by mass or more, more preferably 70% by mass or more, further preferably 80% by mass or more, particularly preferably 85% by mass or more. Besides, a ratio of a content of silica to a content of carbon black in the rubber composition constituting the third layer 8 is not particularly limited.

(Other fillers)

As fillers other than silica and carbon black, those commonly used in the tire industry can be compounded, such as aluminum hydroxide, calcium carbonate, alumina, clay, and talc.

(Silane coupling agent)

Silica is preferably used in combination with a silane coupling agent. The silane coupling agent is not particularly

limited, and a silane coupling agent conventionally used in combination with silica in the tire industry can be used, examples of which include, for example, mercapto-based silane coupling agents described below; sulfide-based silane coupling agents such as bis(3-triethoxysilylpropyl)disulfide and bis(3-triethoxysilylpropyl)tetrasulfide; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxy, and the like. Among them, sulfide-based silane coupling agents and/or mercapto-based silane coupling agents are preferable, and mercapto-based silane coupling agents are more preferable. These silane coupling agents may be used alone or two or more thereof may be used in combination.

It is preferable that the mercapto-based silane coupling agent is a compound represented by the following formula (1) and/or a compound comprising a bond unit A represented by the following formula (2) and a bond unit B represented by the following formula (3).

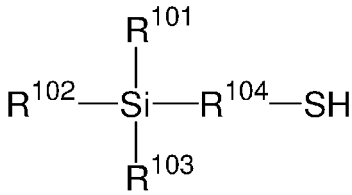

(1)

(wherein, $R^{101}$, $R^{102}$, and $R^{103}$ each independently represents a group represented by alkyl having 1 to 12 carbon atoms, alkoxy having 1 to 12 carbon atoms, or $-O-(R^{111}-O)_z-R^{112}$ (z $R^{111}$s each independently represents a divalent hydrocarbon group having 1 to 30 carbon atoms; $R^{112}$ represents alkyl having 1 to 30 carbon atoms, alkenyl having 2 to 30 carbon atoms, aryl having 6 to 30 carbon atoms, or aralkyl having 7 to 30 carbon atoms; and z represents an integer of 1 to 30); and $R^{104}$ represents an alkylene having 1 to 6 carbon atoms.)

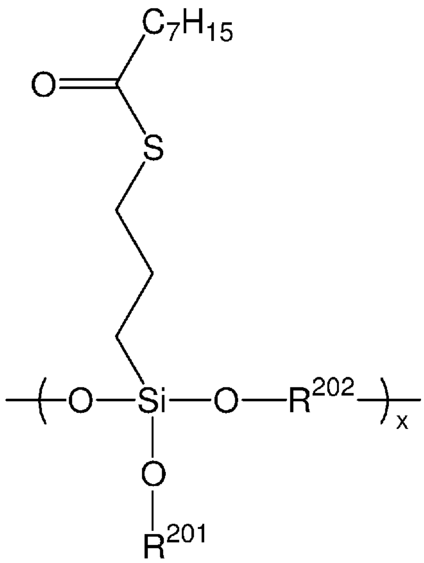

(2)

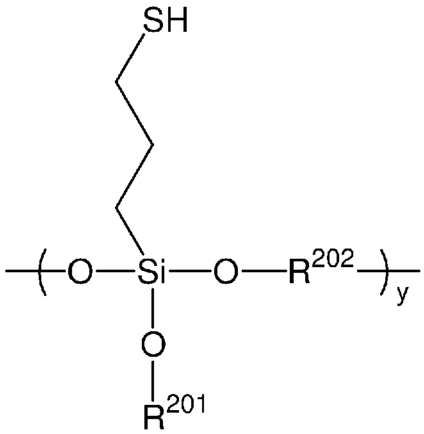

(3)

(wherein, x represents an integer of 0 or more; y represents an integer of 1 or more; $R^{201}$ represents alkyl having 1 to 30 carbon atoms, alkenyl having 2 to 30 carbon atoms, or alkynyl having 2 to 30 carbon atoms, which may be substituted with a hydrogen atom, a halogen atom, hydroxyl, or carboxyl; and $R^{202}$ represents alkylene having 1 to 30 carbon atoms, alkenylene having 2 to 30 carbon atoms, or alkynylene having 2 to 30 carbon atoms; where $R^{201}$ and $R^{202}$ may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (4) (Si363 manufactured by Evonik Degussa GmbH), and the like, and the compound represented by the following formula (4) can be appropriately used. They may be used alone or two or more thereof may be used in combination.

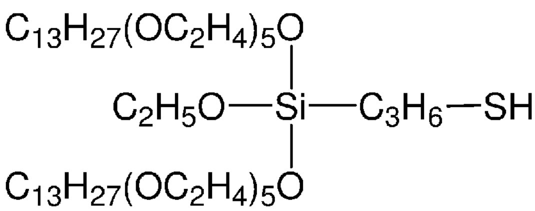

(4)

Examples of the compound comprising the bond unit A represented by the formula (2) and the bond unit B represented by the formula (3) include, for example, those manufactured and sold by Momentive Performance Materials, etc. They may be used alone or two or more thereof may be used in combination.

When the rubber composition comprises the silane coupling agents, the total content thereof is, from the viewpoint of enhancing dispersibility of silica, preferably 0.5 parts by mass or more, more preferably 1.0 part by mass or more, further preferably 2.0 parts by mass or more, particularly preferably 4.0 parts by mass or more based on 100 parts by mass of the rubber component. Moreover, it is preferably 20 parts by mass or less, more preferably 12 parts by mass or less, further preferably 10 parts by mass or less, particularly preferably 9.0 parts by mass or less, from the viewpoint of preventing deterioration of abrasion resistance.

A content of the silane coupling agent based on 100 parts by mass of silica (a total amount of a plurality of silane coupling agents when used in combination) is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

As a filler, other fillers may be used in addition to carbon black and silica. Such filler is not particularly limited, and any filler commonly used in this field such as, for example, aluminum hydroxide, alumina (aluminum oxide), calcium carbonate, magnesium sulfate, talc, and clay can be used. These fillers may be used alone or two or more thereof may be used in combination.

<Plasticizer>

The rubber composition according to the present invention preferably comprises a plasticizer. Examples of the plasticizer include, for example, a resin component, oil, a liquid rubber, an ester-based plasticizer, and the like.

The rubber compositions constituting the first layer 6 and the second layer 7 preferably comprise a resin component. The resin component is not particularly limited, examples of which include a petroleum resin, a terpene-based resin, a rosin-based resin, a phenol-based resin, and the like, which are commonly used in the tire industry. These resin components may be used alone or two or more thereof may be used in combination. Besides, at least one of the rubber composition constituting the first layer 6 and the rubber composition constituting the second layer 7 preferably comprises an aromatic-based petroleum resin.

In the present specification, a "C5-based petroleum resin" refers to a resin obtained by polymerizing a C5 fraction. Examples of the C5 fraction include, for example, a petroleum fraction having 4 to 5 carbon atoms such as cyclopentadiene, pentene, pentadiene, and isoprene. As a C5-based petroleum resin, a dicyclopentadiene resin (DCPD resin) is appropriately used.

In the present specification, the "aromatic-based petroleum resin" refers to a resin obtained by polymerizing a C9 fraction, and may be hydrogenated or modified. Examples of the C9 fraction include, for example, a petroleum fraction corresponding to 8 to 10 carbon atoms such as vinyltoluene, alkylstyrene, indene, and methyl indene. As specific examples of the aromatic-based petroleum resin, for example, a cumarone indene resin, a cumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and good in heat generation. As an aromatic vinyl-based resin, for example, those commercially available from Kraton Corporation, Eastman Chemical Company, etc. can be used.

In the present specification, the "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As a C5-C9-based petroleum resin, those commercially available from, for example, Tosoh Corporation, Zibo Luhua Hongjin New Material Co., Ltd., etc. can be appropriately used.

Examples of the terpene-based resin include a polyterpene resin consisting of at least one selected from terpene compounds such as α-pinene, β-pinene, limonene, and dipentene, an aromatic-modified terpene resin made from the terpene compound and an aromatic compound, a terpene phenol resin made from a terpene compound and a phenol-based compound, and those in which these terpene-based resins are hydrogenated (hydrogenated terpene-based resins). Examples of the aromatic compound used as a raw material for the aromatic-modified terpene resin include, for example, styrene, α-methylstyrene, vinyltoluene, divinyltoluene, and the like. Examples of the phenol-based compound used as a raw material for the terpene phenol resin include, for example, phenol, bisphenol A, cresol, xylenol, and the like.

Example of the rosin-based resin include, but not particularly limited to, for example, a natural resin rosin and a rosin-modified resin obtained by modifying it by hydrogenation, disproportionation, dimerization, esterification, or the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 65°C or higher, from the viewpoint of wet grip performance. Moreover, it is preferably 150°C or lower, more preferably 140°C or lower, further preferably 130°C or lower, from the viewpoints of processability and improvement in dispersibility of a rubber component and a filler. Besides, the softening point in the present specification can be defined as a temperature at which a sphere drops when the softening point specified in JIS K 6220-1: 2001 is measured with a ring and ball softening point measuring device.

When the rubber composition comprises the resin component, the content thereof is, from the viewpoint of wet grip performance, preferably 1 part by mass or more, more preferably 3 parts by mass or more, further preferably 5 parts by mass or more based on 100 parts by mass of the rubber component. Moreover, it is preferably 60 parts by mass or less, more preferably 50 parts by mass or less, further preferably 40 parts by mass or less, particularly preferably 30 parts by mass or less, from the viewpoint of suppressing heat generation.

A ratio of a content of the resin component based on 100 parts by mass of the rubber component of the rubber composition constituting the second layer 7 to a content of the resin component based on 100 parts by mass of the rubber component of the rubber composition constituting the first layer 6 is preferably 3.0 or less, more preferably 2.4 or less, further preferably 1.9 or less, particularly preferably 1.4 or less. When the ratio of the content exceeds 3.0, a local rigidity difference becomes easy to occur at an interface between the first layer 6 and the second layer 7, and the first layer 6 is more likely to have a larger amount of deformation, and therefore, there is a concern that the first layer 6 becomes easy to be partially peeled off, deteriorating the wet grip performance. Moreover, the ratio of the content is preferably 0.3 or more, more preferably 0.5 or more, further preferably 0.7 or more, particularly preferably 1.0 or more. When the ratio of the content is less than 0.3, an amount of a liquid component as a plasticizer in the second layer becomes increased, and there is a concern that the plasticizer may shift from the second layer 7 to the first layer 6 during running.

Examples of oil include, for example, process oil, vegetable fats and oils, animal fats and oils, and the like.

Examples of the process oil include a paraffin-based process oil, a naphthene-based process oil, an aroma-based process oil, and the like. Moreover, as an environmental measure, process oil having a low content of a polycyclic aromatic (PCA) compound can also be used. Examples of the low PCA content process oil include a mild extraction solution (MES), a treated distillate aromatic extract (TDAE), a naphthenic oil, and the like.

When the rubber composition comprises the oil, the content thereof is, from the viewpoint of processability, preferably 5 parts by mass or more, more preferably 10 parts by mass or more, further preferably 15 parts by mass or more based on 100 parts by mass of the rubber component. Moreover, it is preferably 120 parts by mass or less, more preferably 100 parts by mass or less, further preferably 90 parts by mass or less, from the viewpoint of abrasion resistance. Besides, in the present specification, the content of oil also includes an amount of oil contained in an oil-extended rubber.

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone or two or more thereof may be used in combination.

When the rubber composition comprises the liquid rubber, the content thereof is preferably 1 part by mass or more, more preferably 2 parts by mass or more, further preferably 3 parts by mass or more, particularly preferably 5 parts by mass or more based on 100 parts by mass of the rubber component. Moreover, the content of the liquid rubber is preferably 50 parts by mass or less, more preferably 40 parts by mass or less, further preferably 20 parts by mass or less.

Examples of the ester-based plasticizer include, for example, dibutyl adipate (DBA), diisobutyl adipate (DIBA), dioctyl adipate (DOA), di2-ethylhexyl azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizers may be used alone or two or more thereof may be used in combination.

A content of the plasticizer based on 100 parts by mass of the rubber component (a total amount of a plurality of plasticizers when used in combination) is preferably 5 parts by mass or more, more preferably 10 parts by mass or more, further preferably 15 parts by mass or more, from the viewpoint of wet grip performance. Moreover, it is preferably 120 parts by mass or less, more preferably 100 parts by mass or less, further preferably 90 parts by mass or less, particularly preferably 80 parts by mass or less, from the viewpoint of processability.

(Other compounding agents)

The rubber composition according to the present invention can appropriately comprise compounding agents conventionally and generally used in the tire industry, for example, wax, processing aid, an antioxidant, stearic acid, zinc oxide, a vulcanizing agent, a vulcanization accelerator, and the like, in addition to the above-described components.

When the rubber composition comprises the wax, the content thereof is, from the viewpoint of weather resistance of a rubber, preferably 0.5 parts by mass or more, more preferably 1.0 part by mass or more, further preferably 1.5 parts by mass or more based on 100 parts by mass of the rubber component. Moreover, it is preferably 10 parts by mass or less, more preferably 5.0 parts by mass or less, from the viewpoint of preventing whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone or two or more thereof may be used in combination. As processing aid, for example, those commercially available from Schill+Seilacher GmbH, Performance Additives, etc. can be used.

When the rubber composition comprises the processing aid, the content thereof is, from the viewpoint of exhibiting an effect of improving processability, preferably 0.5 parts by mass or more, more preferably 1 part by mass or more, further preferably 1.5 parts by mass or more based on 100 parts by mass of the rubber component. Moreover, it is preferably 10 parts by mass or less, more preferably 8.0 parts by mass or less, from the viewpoints of abrasion resistance and breaking strength.

Examples of antioxidant include, but not particularly limited to, for example, each amine-based, quinoline-based, quinone-based, phenol-based, and imidazole-based compound, and antioxidants such as a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone or two or more thereof may be used in combination.

When the rubber composition comprises the antioxidant, the content thereof is, from the viewpoint of ozone crack resistance of a rubber, preferably 0.5 parts by mass or more, more preferably 1.0 part by mass or more, further preferably 1.5 parts by mass or more based on 100 parts by mass of the rubber component. Moreover, it is preferably

10 parts by mass or less, more preferably 5 parts by mass or less, from the viewpoints of abrasion resistance and wet grip performance.

When the rubber composition comprises the stearic acid, the content thereof is, from the viewpoint of processability, preferably 0.5 parts by mass or more, more preferably 1.0 part by mass or more, further preferably 1.5 parts by mass or more based on 100 parts by mass of the rubber component. Moreover, it is preferably 10 parts by mass or less, more preferably 5.0 parts by mass or less, from the viewpoint of vulcanization rate.

When the rubber composition comprises the zinc oxide, the content thereof is, from the viewpoint of processability, preferably 0.5 parts by mass or more, more preferably 1.0 part by mass or more, further preferably 1.5 parts by mass or more based on 100 parts by mass of the rubber component. Moreover, it is preferably 10 parts by mass or less, more preferably 5.0 parts by mass or less, from the viewpoint of abrasion resistance.

Sulfur is appropriately used as a vulcanizing agent. As sulfur, powdery sulfur, oil processing sulfur, precipitated sulfur, colloidal sulfur, insoluble sulfur, highly dispersible sulfur, and the like can be used.

When the rubber composition comprises the sulfur as a vulcanizing agent, the content thereof is, from the viewpoint of securing a sufficient vulcanization reaction, preferably 0.1 parts by mass or more, more preferably 0.3 parts by mass or more, further preferably 0.5 parts by mass or more based on 100 parts by mass of the rubber component. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, alkylphenol/sulfur chloride condensate, 1,6-hexamethylene-sodium dithiosulfate/dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone or two or more thereof may be used in combination. Among them, one or more vulcanization accelerators selected from the group consisting of sulfenamide-based, guanidine-based, and thiazole-based vulcanization accelerators are preferable, and sulfenamide-based vulcanization accelerators are more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfeneamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof is preferably 1 part by mass or more, more preferably 2 parts by mass or more based on 100 parts by mass of the rubber component. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

The rubber composition according to the present invention can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

Examples of kneading conditions include, but not particularly limited to, for example, in the base kneading step, a method of kneading at a discharge temperature of 150 to 170°C for 3 to 10 minutes, and in the final kneading step, a method of kneading at 70 to 110°C for 1 to 5 minutes. Examples of vulcanization conditions include, but not particularly limited to, for example, a method of vulcanizing at 150 to 200°C for 10 to 30 minutes.

[Tire]

The tire according to the present invention comprises a tread comprising a first layer 6, a second layer 7, and a third layer 8, and may be a pneumatic tire or a non-pneumatic tire. Moreover, it is appropriate for a racing tire, a tire for a passenger car, a tire for a large passenger car, a tire for a large SUV, or a tire for a motorcycle, and can be used as a summer tire, a winter tire, or a studless tire thereof.

The tire comprising a tread comprising a first layer 6, a second layer 7, and a third layer 8 can be manufactured by a usual method using the above-described rubber composition. That is, the tire can be manufactured by extruding unvulcanized rubber compositions, obtained by compounding each of the above-described components based on the rubber component as necessary, into shapes of the first layer 6, the second layer 7, and the third layer 8 with an extruder equipped with a mouthpiece having a predetermined shape, attaching them together with other tire members on a tire forming machine, and molding them by a usual method, forming an unvulcanized tire, followed by heating and pressurizing this unvulcanized tire in a vulcanizing machine.

EXAMPLE

Although the present invention will be described based on Examples, it is not limited to Examples.

Various chemicals used in Examples and Comparative examples are collectively shown below.

NR: TSR20

SBR1: Tufdene 4850 manufactured by Asahi Kasei Corporation (unmodified S-SBR, styrene content: 40% by mass, vinyl content: 46 mol%, Mw: 350,000, comprising 50 parts by mass of an oil content based on 100 parts by mass of a rubber solid content)

SBR2: Modified S-SBR produced in Production example 1 which will be described later (styrene content: 40% by mass, vinyl content: 25 mol%, Mw: 1,000,000, non-oil-extended product)

SBR3: Modified S-SBR produced in Production example 2 which will be described later (styrene content: 25% by mass, vinyl content: 25 mol%, Mw: 1,000,000, non-oil-extended product)

BR: Ubepol BR (Registered Trademark) 150B manufactured by Ube Industries, Ltd. (vinyl content: 1.5 mol%, cis content: 97% by mass, Mw: 440,000)

Carbon black 1: Show Black N330 manufactured by Cabot Japan K.K. ($N_2SA$: 75 $m^2/g$)

Carbon black 2: Show Black N220 manufactured by Cabot Japan K.K. ($N_2SA$: 110 $m^2/g$)

Silica: Ultrasil $VN_3$ ($N_2SA$: 175 $m^2/g$) manufactured by Evonik Degussa GmbH

Silane coupling agent 1: NXT-Z45 manufactured by Momentive Performance Materials (mercapto-based silane coupling agent)

Silane coupling agent 2: Si266 manufactured by Evonik Degussa GmbH (bis(3-triethoxysilylpropyl)disulfide)

Oil: VivaTec 500 manufactured by H8vR Group (TDAE oil)

Resin component: Sylvares SA85 manufactured by Kraton Corporation (copolymer of $\alpha$-methylstyrene and styrene, softening point: 85°C)

Antioxidant: Antigen 6C manufactured by Sumitomo Chemical Co., Ltd. (N-(1,3-dimethylbutyl)-N'-phenyl-p-phenylenediamine)

Wax: SUNNOC N manufactured by Ouchi Shinko Chemical Industry Co., Ltd.

Stearic acid: Bead stearic acid "CAMELLIA" manufactured by NOF CORPORATION

Zinc oxide: Zinc oxide No. 2 manufactured by Mitsui Mining 8v Smelting Co., Ltd.

Sulfur: Powdered sulfur manufactured by Karuizawa Sulfur Co, Ltd.

Vulcanization accelerator 1: Nocceler CZ manufactured by Ouchi Shinko Chemical Industry Co., Ltd. (N-cyclohexyl-2-benzothiazolysulfenamide)

Vulcanization accelerator 2: Nocceler D manufactured by Ouchi Shinko Chemical Industry Co., Ltd. (1,3-diphenylguanidine (DPG))

Production example 1: Synthesis of SBR2

A nitrogen-substituted autoclave reactor was charged with cyclohexane, tetrahydrofuran, styrene, and 1,3-butadiene. A ratio of styrene and 1,3-butadiene was adjusted so that a styrene content was 40% by mass. After adjusting temperature of contents in the reactor to 20°C, n-butyllithium was added to initiate polymerization. The polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a denaturant to perform reaction. After completion of the polymerization reaction, 2,6-di-tert-butyl-p-cresol was added. Next, the mixture was subjected to removal of solvent

by a steam stripping and dried by a heat roll which temperature was adjusted to 110°C to obtain a SBR2.

Production example 2: Synthesis of SBR3

A SBR3 was obtained in the similar manner as in Production example 1 except that the ratio of styrene and 1,3-butadiene was adjusted so that the styrene content was 25% by mass.

(Examples and Comparative examples)

According to the compounding formulations shown in Tables 1, 2, and 4, using a 1.7 L closed Banbury mixer, all chemicals other than sulfur and vulcanization accelerators were kneaded until a discharge temperature at 150°C to 160°C for 1 to 10 minutes to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was molded into each shape of the first layer, the second layer and the third layer of the tread, and attached together with other tire members, preparing an unvulcanized tire, followed by vulcanized at 170°C to obtain each test tire shown in Tables 3 and 5 (size: 195/65R15, rim: 15 × 6.0J, internal pressure: 230 kPa).

<Measurement of loss tangent tan δ, complex elastic modulus E*, and glass transition temperature (Tg)>

For each rubber test piece produced by being cut out with length 20 mm × width 4 mm × thickness 1 mm from inside of a rubber layer of a tread part of each test tire so that a tire circumferential direction is on a long side, using EPLEXOR series manufactured by gabo Systemtechnik GmbH, a loss tangent tan δ and a complex elastic modulus E* were measured under a condition of a temperature at 30°C, an initial strain of 10%, a dynamic strain of 1%, and a frequency of 10 Hz. Moreover, a temperature distribution curve of the loss tangent tan δ was measured under a condition of an initial strain 10%, a dynamic strain 1%, and a frequency 10 Hz, and a temperature corresponding to the largest tan δ value in the obtained temperature distribution curve (tan δ peak temperature) was defined as a glass transition temperature (Tg). Besides, a thickness direction of a sample was defined as a tire radial direction.

<Measurement of acetone extraction amount (AE amount)>

Each rubber test piece after vulcanization was immersed in acetone for 24 hours to extract a soluble component. A mass of each test piece before and after extraction was measured, and an acetone extraction amount was determined by the following equation.

Acetone extraction amount (% by mass) = {(mass of rubber test piece before extraction - mass of rubber test piece after extraction) / (mass of rubber test piece before extraction)} × 100

Besides, as each rubber test piece, a rubber test piece cut out from inside of the rubber layer of the tread part of each test tire was used.

<Measurement of hardness (Hs) of rubber>

A shore hardness (Hs) of each rubber test piece at a temperature of 23°C was measured using a durometer type A in accordance with JIS K6253-3: 2012. Besides, as each rubber test piece, a rubber test piece cut out from inside of the rubber layer of the tread part of each test tire was used.

<Tensile test>

A dumbbell-shaped No. 7 test piece with a thickness of 1 mm, which was cut out from inside of the rubber layer of the tread part of each test tire so that a tire circumferential direction became a tensile direction, was prepared, and according to JIS K 6251: 2017 "Rubber, vulcanized or thermoplastics-Determination of tensile stress-strain properties", a tensile test was conducted under a condition of a tensile speed of 3.3 mm/sec in an atmosphere of 23°C to measure a modulus (MPa) at 100% stretching. Besides, a thickness direction of a sample was defined as a tire radial direction.

<Fuel efficiency>

Using a rolling resistance tester, a rolling resistance when each test tire at the time of the tire being a new article was run under a condition of a rim of 15 × 6.0J, an internal pressure of 230 kPa, a load of 4.24 kN, and a speed at 80 km/h was measured, and the inverse value was indicated as an index as Reference Comparative example (Comparative example 1 in Table 3, Comparative example 3 in Table 5, and the same shall apply hereinafter) being 100. The results show that the larger the numerical value is, the smaller the rolling resistance is, and the better the fuel efficiency is.

<Wet grip performance at the time of the tire being a new article and after abrasion>

Each test tire (size: 195/65R15, rim: 15 × 6.0J, internal pressure: 230 kPa) was mounted on all wheels of a vehicle (domestic FF2000 cc), and a braking distance from a point where a brake was applied at a speed of 100 km/h on a wet asphalt road surface was measured. Furthermore, after thermally deteriorating the above-described tire at 80°C for 7 days, each test tire, in which a tread part was worn along a tread radius so that a thickness of the tread part became 50% of that at the time of the tire being a new article, was mounted on all wheels of the vehicle, and a braking distance from a point where a brake was applied at a speed of 100 km/h on the wet asphalt road surface was measured. A wet grip performance of each tire at the time of the tire being a new article and after abrasion was indicated as an index by the following equations, as each braking distance of the test tire of Reference Comparative example at the time of the tire being a new article and after abrasion being 100. The results show that the larger the index is, the better the wet grip performance is.

(Wet grip performance index at the time of the tire being a new article) = (braking distance at the time of the tire of Reference Comparative example being a new article) / (braking distance at the time of each test tire being a new article) × 100

(Wet grip performance index after abrasion) = (braking distance after abrasion of the tire of Reference Comparative example) / (braking distance after abrasion of each test tire) × 100

A target performance value for a total performance of fuel efficiency, a wet grip performance at the time of the tire being a new article, and a wet grip performance after abrasion (a sum of a fuel efficiency index, a wet grip performance index at the time of the tire being a new article, and a wet grip performance index after abrasion) shall be over 300.

Table 1

| | Compounding for first layer | | | | Compounding for second layer | | | | | |
|---|---|---|---|---|---|---|---|---|---|---|
| | A1 | A2 | A3 | A4 | B1 | B2 | B3 | B4 | B5 | B6 |
| Compounding amount (part by mass) | | | | | | | | | | |
| SBR1 (Oil content) | 127.5 (42.5) | 127.5 (42.5) | 127.5 (42.5) | 127.5 (42.5) | 127.5 (42.5) | 127.5 (42.5) | 127.5 (42.5) | 127.5 (42.5) | 127.5 (42.5) | 127.5 (42.5) |
| BR | 15 | 15 | 15 | 15 | 15 | 15 | 15 | 15 | 15 | 15 |
| Carbon black 1 | 50 | 50 | 40 | 50 | 40 | 40 | 50 | 10 | 40 | 10 |
| Silica | 90 | 90 | 65 | 90 | 65 | 65 | 90 | 70 | 65 | 70 |
| Silane coupling agent 1 | 7.2 | 7.2 | 5.2 | 7.2 | 5.2 | 5.2 | 7.2 | 5.6 | 5.2 | 5.6 |
| Oil | 30 | 40 | - | 45 | 15 | 20 | 50 | | 5.0 | 5.0 |
| Antioxidant | 2.0 | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 | 2.0 | 2.0 |

(continued)

| | Compounding for first layer | | | | Compounding for second layer | | | | | |
|---|---|---|---|---|---|---|---|---|---|---|
| | A1 | A2 | A3 | A4 | B1 | B2 | B3 | B4 | B5 | B6 |
| Compounding amount (part by mass) | | | | | | | | | | |
| Zinc oxide | 2.5 | 2.5 | 2.5 | 2.5 | 2.5 | 2.5 | 2.5 | 2.5 | 2.5 | 2.5 |
| Sulfur | 1.5 | 1.5 | 1.5 | 1.5 | 1.5 | 1.5 | 1.5 | 1.7 | 1.5 | 1.7 |
| Vulcanization accelerator 1 | 2.0 | 2.0 | 2 0 | 2.0 | 2.0 | 2.0 | 2.0 | 2.5 | 2.0 | 2.5 |
| Physical property | | | | | | | | | | |
| 30°C E* (MPa) | 15 | 12 | 15 | 10 | 9 | 8 | 9 | 9 | 12 | 7 |
| 30°C tan δ | 0.40 | 0.40 | 0.30 | 0.40 | 0.30 | 0.30 | 0.40 | 0.20 | 0.30 | 0.20 |
| Acetone extraction amount (% by mass) | 12 | 15 | 12 | 18 | 20 | 21 | 20 | 20 | 15 | 22 |
| Tg (°C) | -10 | -10 | -10 | -10 | -10 | -10 | -10 | -10 | -10 | -10 |
| Shore hardness (Hs) | 70 | 68 | 70 | 66 | 65 | 64 | 65 | 65 | 68 | 63 |
| 100% modulus (MPa) | 1.7 | 1.4 | 2.3 | 1.3 | 1.7 | 1.5 | 1.1 | 1.9 | 2.1 | 1.7 |

Table 2

| | Compounding for third layer | | | |
|---|---|---|---|---|
| | C1 | C2 | C3 | C4 |
| Compounding amount (part by mass) | | | | |
| NR | 40 | 40 | 40 | 40 |
| BR | 60 | 60 | 60 | 60 |
| Carbon black 1 | 60 | 60 | 60 | 85 |
| Oil | 20 | 5.0 | 26 | 45 |
| Antioxidant | 2.0 | 2.0 | 2.0 | 2.0 |
| Wax | 2.0 | 2.0 | 2.0 | 2.0 |
| Stearic acid | 2.0 | 2.0 | 2.0 | 2.0 |
| Zinc oxide | 2.5 | 2.5 | 2.5 | 2.5 |
| Sulfur | 2.5 | 2.5 | 2.5 | 2.5 |
| Vulcanization accelerator 1 | 2.0 | 2.0 | 2.0 | 2.0 |
| Physical property | | | | |
| 30°C E* (MPa) | 7 | 11 | 6 | 7 |
| 30°C tan δ | 0.20 | 0.20 | 0.20 | 0.30 |

Table 3

| | Example | | | | | | | | | | | | | Comparative example |
|---|---|---|---|---|---|---|---|---|---|---|---|---|---|---|
| | 1 | 2 | 3 | 4 | 5 | 6 | 7 | 8 | 9 | 10 | 11 | 12 | 13 | 1 |
| Compounding for first layer | A2 | A1 | A1 | A1 | A1 | A1 | A1 | A1 | A2 | A1 | A4 | A2 | A1 | A3 |
| Compounding for second layer | B2 | B1 | B1 | B6 | B1 | B1 | B1 | B1 | B2 | B4 | B5 | B1 | B5 | B3 |
| Compounding for third layer | C2 | C1 | C1 | - | C1 | C1 | C1 | C1 | C3 | C4 | C1 | C1 | C2 | C1 |
| 30°C E* (MPa) | | | | | | | | | | | | | | |
| First layer | 12 | 15 | 15 | 15 | 15 | 15 | 15 | 15 | 12 | 15 | 10 | 12 | 15 | 15 |
| Second layer | 8 | 9 | 9 | 7 | 9 | 9 | 9 | 9 | 8 | 9 | 12 | 9 | 12 | 9 |
| Third layer | 11 | 7 | 7 | - | 7 | 7 | 7 | 7 | 6 | 7 | 7 | 7 | 11 | 7 |
| 30°C tan δ | | | | | | | | | | | | | | |
| First layer | 0.40 | 0.40 | 0.40 | 0.40 | 0.40 | 0.40 | 0.40 | 0.40 | 0.40 | 0.40 | 0.40 | 0.40 | 0.40 | 0.30 |
| Second layer | 0.30 | 0.30 | 0.30 | 0.20 | 0.30 | 0.30 | 0.30 | 0.30 | 0.30 | 0.20 | 0.30 | 0.30 | 0.30 | 0.40 |
| Third layer | 0.20 | 0.20 | 0.20 | - | 0.20 | 0.20 | 0.20 | 0.20 | 0.20 | 0.30 | 0.20 | 0.20 | 0.20 | 0.20 |
| Acetone extraction amount (% by mass) | | | | | | | | | | | | | | |
| First layer | 15 | 12 | 12 | 12 | 12 | 12 | 12 | 12 | 15 | 12 | 18 | 15 | 12 | 12 |
| Second layer | 21 | 20 | 20 | 22 | 20 | 20 | 20 | 20 | 21 | 20 | 15 | 20 | 15 | 20 |
| Tg (°C) | | | | | | | | | | | | | | |
| First layer | -10 | -10 | -10 | -10 | -10 | -10 | -10 | -10 | -10 | -10 | -10 | -10 | -10 | -10 |
| Second layer | -10 | -10 | -10 | -10 | -10 | -10 | -10 | -10 | -10 | -10 | -10 | -10 | -10 | -10 |
| Shore hardness (Hs) | | | | | | | | | | | | | | |
| First layer | 68 | 70 | 70 | 70 | 70 | 70 | 70 | 70 | 68 | 70 | 66 | 68 | 70 | 70 |
| Second layer | 64 | 65 | 65 | 63 | 65 | 65 | 65 | 65 | 64 | 65 | 68 | 65 | 68 | 65 |
| 100% modulus (MPa) | | | | | | | | | | | | | | |
| First layer | 1.4 | 1.7 | 1.7 | 1.7 | 1.7 | 1.7 | 1.7 | 1.7 | 1.4 | 1.7 | 1.3 | 1.4 | 1.7 | 2.3 |
| Second layer | 1.5 | 1.7 | 1.7 | 1.7 | 1.7 | 1.7 | 1.7 | 1.7 | 1.5 | 1.9 | 2.1 | 1.7 | 2.1 | 1.1 |
| t1 (mm) | 3 | 3 | 3 | 7 | 3 | 3 | 2 | 4 | 3 | 3 | 3 | 3 | 3 | 3 |
| t2 (mm) | 3 | 5 | 3 | 3 | 3 | 4 | 4 | 3 | 3 | 3 | 3 | 3 | 3 | 3 |

(continued)

| | | | | | | | | | | | | | | |
|---|---|---|---|---|---|---|---|---|---|---|---|---|---|---|
| 100% modulus (MPa) | | | | | | | | | | | | | | |
| t3 (mm) | 4 | 2 | 4 | - | 4 | 3 | 4 | 3 | 4 | 4 | 4 | 4 | 4 | 4 |
| H1 (mm) | 7 | 7 | 7 | 8 | 7 | 8 | 7 | 8 | 7 | 7 | 7 | 7 | 7 | 7 |
| Cross-sectional view of tread | Fig. 1 | Fig. 3 | Fig. 2 | Fig. 4 | Fig. 1 | Fig. 1 | Fig. 1 | Fig. 1 | Fig. 1 | Fig. 1 | Fig. 1 | Fig. 1 | Fig. 1 | Fig. 1 |
| Tread grounding surface | Fig. 7 | Fig. 7 | Fig. 7 | Fig. 7 | Fig. 7 | Fig. 7 | Fig. 7 | Fig. 7 | Fig. 7 | Fig. 7 | Fig. 7 | Fig. 7 | Fig. 7 | Fig. 7 |
| Index | | | | | | | | | | | | | | |
| Fuel efficiency | 100 | 98 | 100 | 93 | 100 | 98 | 101 | 98 | 100 | 98 | 100 | 100 | 100 | 100 |
| Wet grip performance at the time of tire being new article | 109 | 109 | 109 | 109 | 109 | 109 | 109 | 109 | 109 | 109 | 109 | 109 | 109 | 100 |
| Wet grip performance after abrasion | 100 | 97 | 97 | 102 | 111 | 108 | 111 | 108 | 111 | 107 | 111 | 111 | 105 | 100 |
| Total performance | 309 | 304 | 306 | 304 | 320 | 315 | 321 | 315 | 320 | 314 | 320 | 320 | 314 | 300 |

Table 4

| | Compounding for first layer | | | | Compounding for second layer | | | | |
|---|---|---|---|---|---|---|---|---|---|
| | A5 | A6 | A7 | A8 | B7 | B8 | B9 | B10 | B11 |
| Compounding amount (part by mass) | | | | | | | | | |
| SBR2 | 20 | 20 | 20 | 20 | 40 | 40 | 40 | 40 | 40 |
| SBR3 | 65 | 65 | 65 | 65 | 45 | 45 | 45 | 45 | 45 |
| BR | 15 | 15 | 15 | 15 | 15 | 15 | 15 | 15 | 15 |
| Carbon black 2 | 10 | 10 | 10 | 10 | 10 | 10 | 10 | 10 | 10 |
| Silica | 80 | 80 | 70 | 90 | 70 | 75 | 70 | 85 | 75 |
| Silane coupling agent 2 | 7.0 | 7.0 | 6.0 | 7.0 | 6.0 | 6.0 | 6.0 | 7.0 | 6.0 |
| Oil | 10 | 15 | 10 | 20 | 13 | 20 | 15 | 10 | 20 |
| Resin component | 10 | 10 | 5.0 | 10 | 12 | 5.0 | 5.0 | 8.0 | 5.0 |
| Antioxidant | 2.0 | 2.0 | 2.0 | 2.0 | 2.0 | 2.0 | 2.0 | 2.0 | 2.0 |
| Wax | 1.0 | 1.0 | 1.0 | 1.0 | 1.0 | 1.0 | 1.0 | 1.0 | 1.0 |
| Stearic acid | 2.0 | 2.0 | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 | 2.0 | 2.0 |
| Sulfur | 1.0 | 1.0 | 1.0 | 1.0 | 1.0 | 1.0 | 1.0 | 1.0 | 1.0 |
| Vulcanization accelerator 1 | 2.0 | 2.0 | 2.0 | 2.0 | 2.0 | 2.0 | 2.0 | 2.0 | 2.0 |
| Vulcanization accelerator 2 | 2.0 | 2.0 | 2.0 | 2.0 | 2.0 | 2.0 | 2.0 | 2.0 | 2.0 |
| Physical property | | | | | | | | | |
| 30°C E* (MPa) | 10 | 5 | 10 | 8 | 5 | 5 | 8 | 12 | 8 |
| 30°C tan $\delta$ | 0.25 | 0.25 | 0.18 | 0.30 | 0.15 | 0.18 | 0.15 | 0.28 | 0.20 |
| Acetone extraction amount (% by mass) | 18 | 23 | 16 | 21 | 20 | 19 | 18 | 16 | 19 |
| Tg (°C) | -11 | -11 | -12 | -12 | -8 | -11 | -11 | -10 | -13 |
| Shore hardness (Hs) | 65 | 60 | 64 | 63 | 60 | 60 | 62 | 68 | 62 |
| 100% modulus (MPa) | 2.5 | 2.0 | 2.4 | 2.2 | 2.0 | 2.2 | 2.4 | 2.9 | 2.3 |

Table 5

| | Example | | | | | | | | | Comparative example | | | |
|---|---|---|---|---|---|---|---|---|---|---|---|---|---|
| | 14 | 15 | 16 | 17 | 18 | 19 | 20 | 21 | 22 | 2 | 3 | 4 | 5 |
| Compounding for first layer | A5 | A5 | A5 | A8 | A8 | A7 | A5 | A5 | A5 | A5 | A6 | A7 | A7 |
| Compounding for second layer | B8 | B9 | B7 | B7 | B8 | B7 | B7 | B7 | B7 | B10 | B9 | B10 | B11 |
| Compounding for third layer | - | - | - | - | - | - | C1 | - | - | - | - | - | - |
| 30°C E* (MPa) | | | | | | | | | | | | | |
| First layer | 10 | 10 | 10 | 8 | 8 | 10 | 10 | 10 | 10 | 10 | 5 | 10 | 10 |
| Second layer | 5 | 8 | 5 | 5 | 5 | 5 | 5 | 5 | 5 | 12 | 8 | 12 | 8 |
| Third layer | - | - | - | - | - | - | 7 | - | - | - | - | - | - |
| 30°C tan δ | | | | | | | | | | | | | |
| First layer | 0.25 | 0.25 | 0.25 | 0.30 | 0.30 | 0.18 | 0.30 | 0.30 | 0.30 | 0.25 | 0.25 | 0.18 | 0.18 |
| Second layer | 0.18 | 0.15 | 0.15 | 0.15 | 0.18 | 0.15 | 0.15 | 0.15 | 0.15 | 0.28 | 0.15 | 0.28 | 0.20 |
| Third layer | - | - | - | - | - | - | 0.20 | - | - | - | - | - | - |
| Acetone extraction amount (% by mass) | | | | | | | | | | | | | |
| First layer | 18 | 18 | 18 | 21 | 21 | 16 | 18 | 18 | 18 | 18 | 23 | 16 | 16 |
| Second layer | 19 | 18 | 20 | 20 | 19 | 20 | 20 | 20 | 20 | 16 | 18 | 16 | 19 |
| Tg (°C) | | | | | | | | | | | | | |
| First layer | -11 | -11 | -11 | -12 | -12 | -12 | -11 | -11 | -11 | -11 | -11 | -12 | -12 |
| Second layer | -11 | -11 | -8 | -8 | -11 | -8 | -8 | -8 | -8 | -10 | -11 | -10 | -13 |
| Shore hardness (Hs) | | | | | | | | | | | | | |
| First layer | 65 | 65 | 65 | 63 | 63 | 64 | 65 | 65 | 65 | 65 | 60 | 64 | 64 |
| Second layer | 60 | 62 | 60 | 60 | 60 | 60 | 60 | 60 | 60 | 68 | 62 | 68 | 62 |
| 100% modulus (MPa) | | | | | | | | | | | | | |
| First layer | 2.5 | 2.5 | 2.5 | 2.2 | 2.2 | 2.4 | 2.5 | 2.5 | 2.5 | 2.5 | 2.0 | 2.4 | 2.4 |
| Second layer | 2.2 | 2.4 | 2.0 | 2.0 | 2.2 | 2.0 | 2.0 | 2.0 | 2.0 | 2.9 | 2.4 | 2.9 | 2.3 |
| t1 (mm) | 5.5 | 5.5 | 5.5 | 5.5 | 5.5 | 5.5 | 3.0 | 4.0 | 4.0 | 5.5 | 5.5 | 5.5 | 5.5 |
| t2 (mm) | 1.5 | 1.5 | 1.5 | 1.5 | 1.5 | 1.5 | 3.0 | 3.0 | 3.0 | 1.5 | 1.5 | 1.5 | 1.5 |
| t3 (mm) | - | - | - | - | - | - | 1.0 | - | - | - | - | - | - |

(continued)

| | | | | | | | | | | | | | |
|---|---|---|---|---|---|---|---|---|---|---|---|---|---|
| 100% modulus (MPa) | | | | | | | | | | | | | |
| H1 (mm) | 6.0 | 6.0 | 6.0 | 6.0 | 6.0 | 6.0 | 6.0 | 6.0 | 6.0 | 6.0 | 6.0 | 6.0 | 6.0 |
| Cross-sectional view of tread | Fig. 5 | Fig. 5 | Fig. 5 | Fig. 5 | Fig. 5 | Fig. 5 | Fig. 6 | Fig. 5 | Fig. 4 | Fig. 5 | Fig. 5 | Fig. 5 | Fig. 5 |
| Tread grounding surface | Fig. 7 | Fig. 7 | Fig. 7 | Fig. 7 | Fig. 7 | Fig. 7 | Fig. 7 | Fig. 8 | Fig. 7 | Fig. 7 | Fig. 7 | Fig. 7 | Fig. 7 |
| Index | | | | | | | | | | | | | |
| Fuel efficiency | 102 | 105 | 105 | 104 | 103 | 120 | 103 | 105 | 106 | 79 | 100 | 93 | 99 |
| Wet grip performance at the time of tire being new article | 108 | 106 | 110 | 112 | 115 | 101 | 116 | 115 | 112 | 114 | 100 | 95 | 79 |
| Wet grip performance after abrasion | 103 | 101 | 103 | 103 | 106 | 103 | 103 | 103 | 103 | 110 | 100 | 100 | 101 |
| Total performance | 313 | 312 | 318 | 319 | 324 | 324 | 322 | 323 | 321 | 303 | 300 | 288 | 279 |

From the results in Tables 1 to 5, it can be seen that the tire of the present invention, in which two or more rubber layers are provided on the tread part and a complex elastic modulus E* and a loss tangent tan δ of the rubber layers are in a predetermined relationship, has an improved overall performance of fuel efficiency, a wet grip performance at the time of the tire being a new article, and a wet grip performance after abrasion.

EXPLANATION OF NUMERALS

1. Circumferential groove
2. Land part
3. Tread surface
4. Extension line of land part
5. Extension line of deepest part of groove bottom of circumferential groove
6. First layer
7. Second layer
8. Third layer
9. Outermost extension line of second layer
10. Outermost extension line of third layer
11. Shoulder land part
12. Center land part
21. Shoulder lateral groove
22. Shoulder sipe
23. Center sipe

## Claims

1. A tire having a tread comprising at least a first layer (6) constituting a tread surface (3) and a second layer (7) adjacent to inside in a tire radial direction of the first layer (6),

   wherein the tread has land parts (2) partitioned by a plurality of circumferential grooves (1) extending continuously in a tire circumferential direction,
   wherein each of the first layer (6) and the second layer (7) is composed of a rubber composition comprising a rubber component and a plasticizer,
   wherein a ratio of a complex elastic modulus of the first layer (6) at 30°C to a complex elastic modulus of the second layer (7) at 30°C is 0.85 or more,
   wherein a ratio of a tan δ of the first layer (6) at 30°C to a tan δ of the second layer (7) at 30°C is 1.0 or more,
   wherein the complex elastic modulus at 30°C of the first layer is 10 MPa or more, and
   wherein the complex elastic modulus and the tan δ are measured under a condition of a temperature at 30°C, an initial strain of 10%, a dynamic strain of 1%, and a frequency of 10 Hz.

2. The tire of claim 1, wherein the ratio of the tan δ of the first layer (6) at 30°C to the tan δ of the second layer (7) at 30°C is 1.2 or more.

3. The tire of claim 1 or 2, wherein the ratio of the tan δ of the first layer (6) at 30°C to the tan δ of the second layer (7) at 30°C is 1.4 to 2.0.

4. The tire of any one of claims 1 to 3, wherein a content of a butadiene rubber in the rubber component constituting the first layer (6) is 35% by mass or less.

5. The tire of any one of claims 1 to 4, wherein a difference between an acetone extraction amount AE1 in the rubber composition constituting the first layer and an acetone extraction amount AE2 in the rubber composition constituting the second layer |AE1-AE2| is 10% by mass or less.

6. The tire of any one of claims 1 to 5, wherein each of the rubber composition constituting the first layer (6) and the rubber composition constituting the second layer (7) comprises a resin component.

7. The tire of any one of claims 1 to 6, wherein at least one of the rubber composition constituting the first layer (6) and the rubber composition constituting the second layer (7) comprises an aromatic-based petroleum resin.

8. The tire of any one of claims 1 to 7, wherein a ratio of a content of the resin component based on 100 parts by mass of the rubber component in the rubber composition constituting the second layer (7) to a content of the resin component based on 100 parts by mass of the rubber component in the rubber composition constituting the first layer (6) is 2.4 or less.

9. The tire of any one of claims 1 to 8, comprising a third layer (8) adjacent to inside in a tire radial direction of the second layer (7).

10. The tire of any one of claims 1 to 9, wherein a ratio of a thickness of the first layer (6) to a total thickness of the first layer (6) and the second layer (7) is 0.40 or more.

11. The tire of any one of claims 1 to 10, wherein the complex elastic modulus of the second layer (7) at 30°C is 5 MPa or more.

12. The tire of any one of claims 1 to 11, wherein the tan δ of the second layer (7) at 30°C is 0.30 or less.

13. The tire of any one of claims 1 to 12, wherein a glass transition temperature of the first layer (6) is -15°C or higher.

14. The tire of any one of claims 1 to 13, wherein a shore hardness (Hs) of the second layer (7) measured at a temperature of 23°C using a durometer type A in accordance with JIS K 6253-3: 2012 is 50 to 80.

15. The tire of any one of claims 1 to 14, wherein a modulus of the first layer (6) at 100% stretching is larger than that of the second layer (7) at 100% stretching.

16. The tire of any one of claims 1 to 15, wherein a deepest part of a groove bottom of any one of the circumferential grooves (1) is formed so as to be located inside in a tire radial direction with respect to an outermost part of the second layer (7) in the land part (2) adjacent to the circumferential groove (1).

17. The tire of any one of claims 1 to 16, wherein the land part (2) has a sipe (22, 23) having both ends not opened in the circumferential groove (1).

18. The tire of any one of claims 1 to 17, having a portion where a length in a width direction of the land part (2) closest to an equatorial plane of the tire increases from outside to inside in the tire radial direction.

**Patentansprüche**

1. Reifen, welcher einen Laufstreifen aufweist, der zumindest eine erste Schicht (6), die eine Laufstreifenoberfläche (3) bildet, und eine zweite Schicht (7), die in einer Reifenradialrichtung innen zu der ersten Schicht (6) benachbart ist, umfasst,

   wobei der Laufstreifen Positivprofilbereiche (2) aufweist, die durch eine Mehrzahl an Umfangsrillen (1) unterteilt sind, die sich durchgehend in einer Reifenumfangsrichtung erstrecken,
   wobei jede von der ersten Schicht (6) und der zweiten Schicht (7) mit einer Kautschukzusammensetzung aufgebaut ist, die eine Kautschuckomponente und einen Weichmacher umfasst,
   wobei ein Verhältnis eines komplexen Elastizitätsmoduls der ersten Schicht (6) bei 30°C zu einem komplexen Elastizitätsmodul der zweiten Schicht (7) bei 30°C 0,85 oder mehr beträgt,
   wobei ein Verhältnis eines tan δ der ersten Schicht (6) bei 30°C zu einem tan δ der zweiten Schicht (7) bei 30°C 1,0 oder mehr beträgt,
   wobei der komplexe Elastizitätsmodul bei 30°C der ersten Schicht 10 MPa oder mehr beträgt, und
   wobei der komplexe Elastizitätsmodul und der tan δ unter Bedingungen einer Temperatur von 30°C, einer Anfangsdehnung von 10%, einer dynamischen Dehnung von 1% und einer Frequenz von 10 Hz gemessen sind.

2. Reifen nach Anspruch 1, wobei das Verhältnis des tan δ der ersten Schicht (6) bei 30°C zu dem tan δ der zweiten Schicht (7) bei 30°C 1,2 oder mehr beträgt.

**3.** Reifen nach Anspruch 1 oder 2, wobei das Verhältnis des tan δ der ersten Schicht (6) bei 30°C zu dem tan δ der zweiten Schicht (7) bei 30°C 1,4 bis 2,0 beträgt.

**4.** Reifen nach einem der Ansprüche 1 bis 3, wobei ein Gehalt eines Butadienkautschuks in der Kautschukkomponente, welche die erste Schicht (6) bildet, 35 Massenprozent oder weniger beträgt.

**5.** Reifen nach einem der Ansprüche 1 bis 4, wobei eine Differenz |AE1-AE2| zwischen einer Aceton-Extraktionsmenge AE1 in der Kautschukzusammensetzung, welche die erste Schicht bildet, und einer Aceton-Extraktionsmenge AE2 in der Kautschukzusammensetzung, welche die zweite Schicht bildet, 10 Massenprozent oder weniger beträgt.

**6.** Reifen nach einem der Ansprüche 1 bis 5, wobei jede von der Kautschukzusammensetzung, welche die erste Schicht (6) bildet, und der Kautschukzusammensetzung, welche die zweite Schicht (7) bildet, einen Harzbestandteil umfasst.

**7.** Reifen nach einem der Ansprüche 1 bis 6, wobei mindestens eine von der Kautschukzusammensetzung, welche die erste Schicht (6) bildet, und der Kautschukzusammensetzung, welche die zweite Schicht (7) bildet, ein Petrolharz auf aromatischer Basis umfasst.

**8.** Reifen nach einem der Ansprüche 1 bis 7, wobei ein Verhältnis eines Gehalts des Harzbestandteils, bezogen auf 100 Massenteile der Kautschukkomponente in der Kautschukzusammensetzung, welche die zweite Schicht (7) bildet, zu einem Gehalt des Harzbestandteils, bezogen auf 100 Massenteile der Kautschukkomponente in der Kautschukzusammensetzung, welche die erste Schicht (6) bildet, 2,4 oder weniger beträgt.

**9.** Reifen nach einem der Ansprüche 1 bis 8, welcher eine dritte Schicht (8) umfasst, die in einer Reifenradialrichtung innen zu der zweiten Schicht (7) benachbart ist.

**10.** Reifen nach einem der Ansprüche 1 bis 9, wobei ein Verhältnis einer Dicke der ersten Schicht (6) zu einer Gesamtdicke der ersten Schicht (6) und der zweiten Schicht (7) 0,40 oder mehr beträgt.

**11.** Reifen nach einem der Ansprüche 1 bis 10, wobei der komplexe Elastizitätsmodul der zweiten Schicht (7) bei 30°C 5 MPa oder mehr beträgt.

**12.** Reifen nach einem der Ansprüche 1 bis 11, wobei der tan δ der zweiten Schicht (7) bei 30°C 0,30 oder weniger beträgt.

**13.** Reifen nach einem der Ansprüche 1 bis 12, wobei eine Glasübergangstemperatur der ersten Schicht (6) -15°C oder höher ist.

**14.** Reifen nach einem der Ansprüche 1 bis 13, wobei eine Shore-Härte (Hs) der zweiten Schicht (7), die bei einer Temperatur von 23°C unter Verwendung eines Durometers vom Typ A gemäß JIS K 6253-3: 2012 gemessen ist, 50 bis 80 beträgt.

**15.** Reifen nach einem der Ansprüche 1 bis 14, wobei ein Modul der ersten Schicht (6) bei 100% Streckung größer ist als derjenige der zweiten Schicht (7) bei 100% Streckung.

**16.** Reifen nach einem der Ansprüche 1 bis 15, wobei ein tiefster Teil eines Rillenbodens einer der Umfangsrillen (1) so ausgebildet ist, dass er sich, bezüglich eines äußersten Teils der zweiten Schicht (7) in dem zu der Umfangsrille (1) benachbarten Positivprofilbereich (2), in einer Reifenradialrichtung innen befindet.

**17.** Reifen nach einem der Ansprüche 1 bis 16, wobei der Positivprofilbereich (2) einen Einschnitt (22, 23) aufweist, bei dem beide Enden nicht in der Umfangsrille (1) geöffnet sind.

**18.** Reifen nach einem der Ansprüche 1 bis 17, der einen Abschnitt aufweist, wo eine Länge in einer Breitenrichtung des Positivprofilbereichs (2), der einer Äquatorebene des Reifens am nächsten liegt, in der Reifenradialrichtung von außen nach innen zunimmt.

**Revendications**

1. Pneumatique ayant une bande de roulement comprenant au moins une première couche (6) constituant une surface de bande de roulement (3) et une deuxième couche (7) adjacente à un intérieur dans une direction radiale du pneumatique de la première couche (6),

   dans lequel la bande de roulement a des parties en relief (2) cloisonnées par une pluralité de rainures circonférentielles (1) s'étendant en continu dans une direction circonférentielle du pneumatique,
   dans lequel chacune de la première couche (6) et de la deuxième couche (7) est composée d'une composition de caoutchouc comprenant un composant de caoutchouc et un plastifiant,
   dans lequel un rapport d'un module d'élasticité complexe de la première couche (6) à 30 °C sur un module d'élasticité complexe de la deuxième couche (7) à 30 °C est de 0,85 ou plus,
   dans lequel un rapport d'une valeur tan δ de la première couche (6) à 30 °C sur une valeur tan δ de la deuxième couche (7) à 30 °C est de 1,0 ou plus,
   dans lequel le module d'élasticité complexe à 30 °C de la première couche est de 10 MPa ou plus, et
   dans lequel le module d'élasticité complexe et la valeur tan δ sont mesurés sous une condition d'une température de 30 °C, d'une contrainte initiale de 10 %, d'une contrainte dynamique de 1 % et d'une fréquence de 10 Hz.

2. Pneumatique selon la revendication 1, dans lequel le rapport de la valeur tan δ de la première couche (6) à 30 °C sur la valeur tan δ de la deuxième couche (7) à 30 °C est de 1,2 ou plus.

3. Pneumatique selon la revendication 1 ou 2, dans lequel le rapport de la valeur tan δ de la première couche (6) à 30 °C sur la valeur tan δ de la deuxième couche (7) à 30 °C est de 1,4 à 2,0.

4. Pneumatique selon l'une quelconque des revendications 1 à 3, dans lequel une teneur d'un caoutchouc butadiène dans le composant de caoutchouc constituant la première couche (6) est de 35 % en masse ou moins.

5. Pneumatique selon l'une quelconque des revendications 1 à 4, dans lequel une différence entre une quantité d'extraction d'acétone AE1 dans la composition de caoutchouc constituant la première couche et une quantité d'extraction d'acétone AE2 dans la composition de caoutchouc constituant la deuxième couche |AE1-AE2| est de 10 % en masse ou moins.

6. Pneumatique selon l'une quelconque des revendications 1 à 5, dans lequel chacune de la composition de caoutchouc constituant la première couche (6) et de la composition constituant la deuxième couche (7) comprend un composant résineux.

7. Pneumatique selon l'une quelconque des revendications 1 à 6, dans lequel l'une au moins de la composition de caoutchouc constituant la première couche (6) et de la composition de caoutchouc constituant la deuxième couche (7) comprend une résine de pétrole à base aromatique.

8. Pneumatique selon l'une quelconque des revendications 1 à 7, dans lequel un rapport d'une teneur du composant résineux sur la base de 100 parts en masse du composant de caoutchouc dans la composition de caoutchouc constituant la deuxième couche (7) sur une teneur du composant résineux sur la base de 100 parts en masse du composant de caoutchouc dans la composition de caoutchouc constituant la première couche (6) est de 2,4 ou moins.

9. Pneumatique selon l'une quelconque des revendications 1 à 8, comprenant une troisième couche (8) adjacente à un intérieur dans la direction radiale du pneumatique de la deuxième couche (7).

10. Pneumatique selon l'une quelconque des revendications 1 à 9, dans lequel un rapport d'une épaisseur de la première couche (6) sur une épaisseur totale de la première couche (6) et de la deuxième couche (7) est de 0,40 ou plus.

11. Pneumatique selon l'une quelconque des revendications 1 à 10, dans lequel le module d'élasticité complexe de la deuxième couche (7) à 30 °C est de 5 MPa ou plus.

12. Pneumatique selon l'une quelconque des revendications 1 à 11, dans lequel la valeur tan δ de la deuxième couche (7) à 30 °C est de 0,30 ou moins.

13. Pneumatique selon l'une quelconque des revendications 1 à 12, dans lequel une température de transition vitreuse

de la première couche (6) est de -15 °C ou plus élevée.

**14.** Pneumatique selon l'une quelconque des revendications 1 à 13, dans lequel une dureté Shore (Hs) de la deuxième couche (7) mesurée à une température de 23 °C en utilisant un duromètre de type A en accord avec la norme industrielle japonaise JIS K 6253-3: 2012 est de 50 à 80.

**15.** Pneumatique selon l'une quelconque des revendications 1 à 14, dans lequel un module de la première couche (6) à 100 % d'étirement est plus grand que celui de la deuxième couche (7) à 100 % d'étirement.

**16.** Pneumatique selon l'une quelconque des revendications 1 à 15, dans lequel une partie la plus profonde d'un fond de rainure de l'une quelconque des rainures circonférentielles (1) est formée de manière à être située à l'intérieur dans une direction radiale du pneumatique par rapport à une partie la plus à l'extérieur de la deuxième couche (7) dans la partie en relief (2) adjacente à la rainure circonférentielle (1).

**17.** Pneumatique selon l'une quelconque des revendications 1 à 16, dans lequel la partie en relief (2) a une fente (22, 23) dont les deux extrémités ne sont pas ouvertes dans la rainure circonférentielle (1).

**18.** Pneumatique selon l'une quelconque des revendications 1 à 17, ayant une portion dans laquelle une longueur dans une direction en largeur de la partie en relief (2) la plus proche d'un plan d'équateur du pneumatique augmente depuis l'extérieur jusqu'à l'intérieur dans la direction radiale du pneumatique.

# Fig. 1

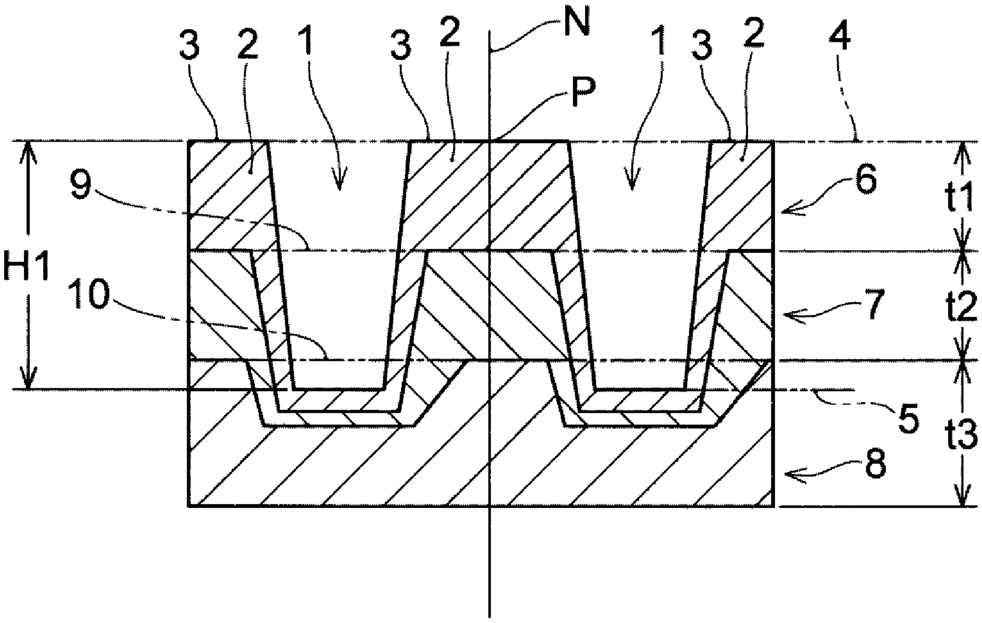
3
2
1
3
2
N
1
3
2
4
P
H1
9
10
6
7
8
5
t1
t2
t3

# Fig. 2

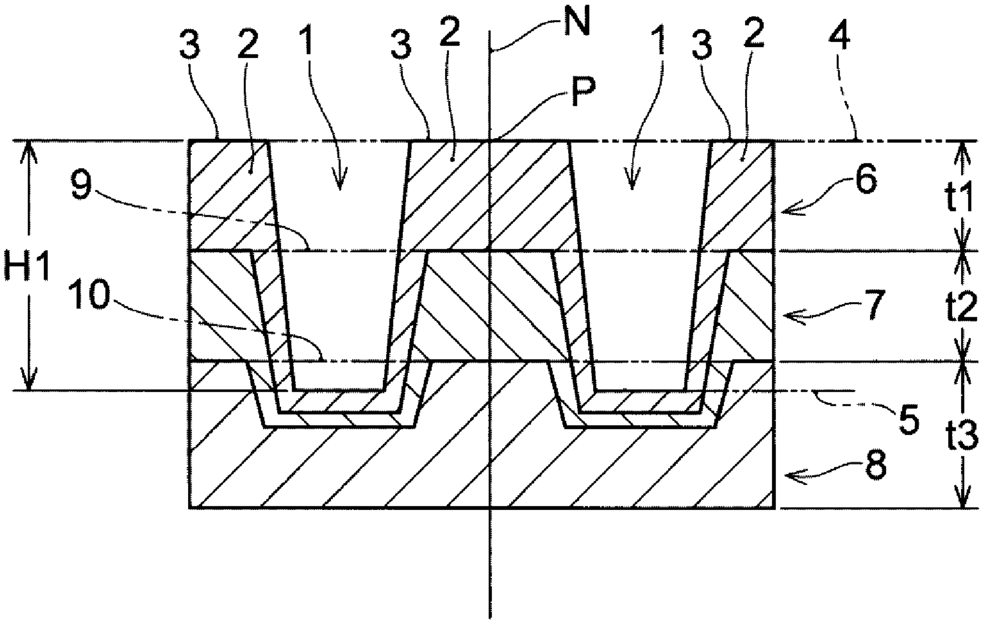
3
2
1
3
2
N
1
3
2
4
P
H1
9
10
6
7
8
5
t1
t2
t3

Fig. 3

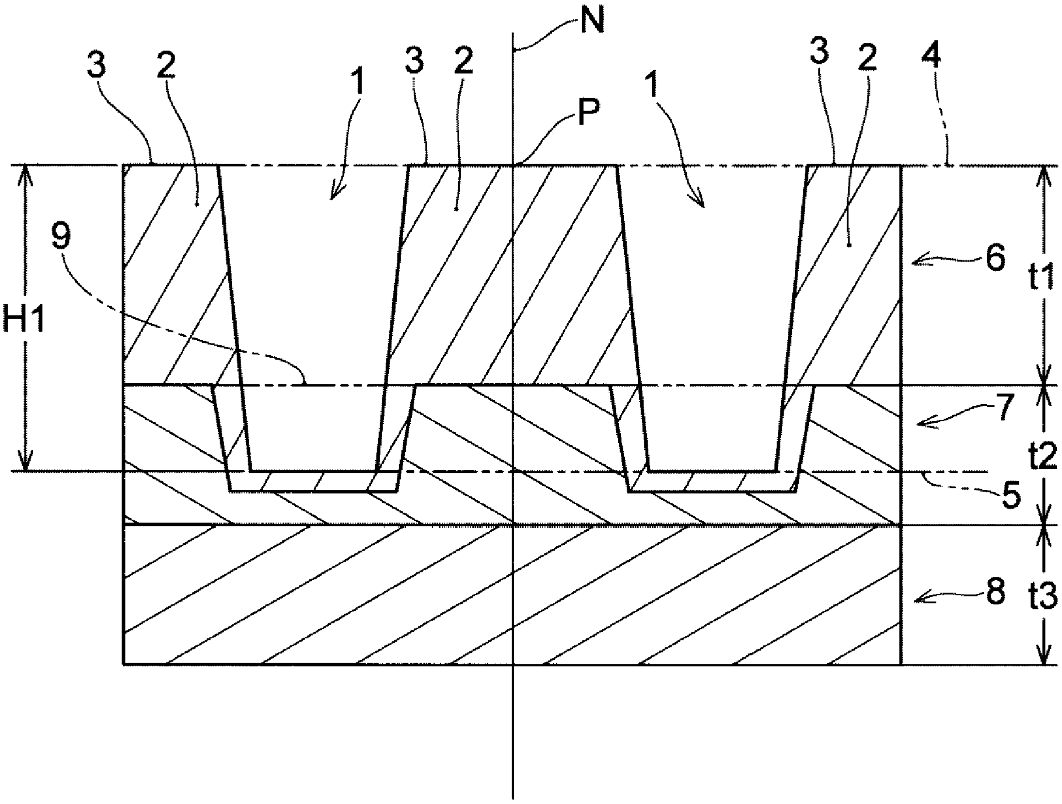


Fig. 4

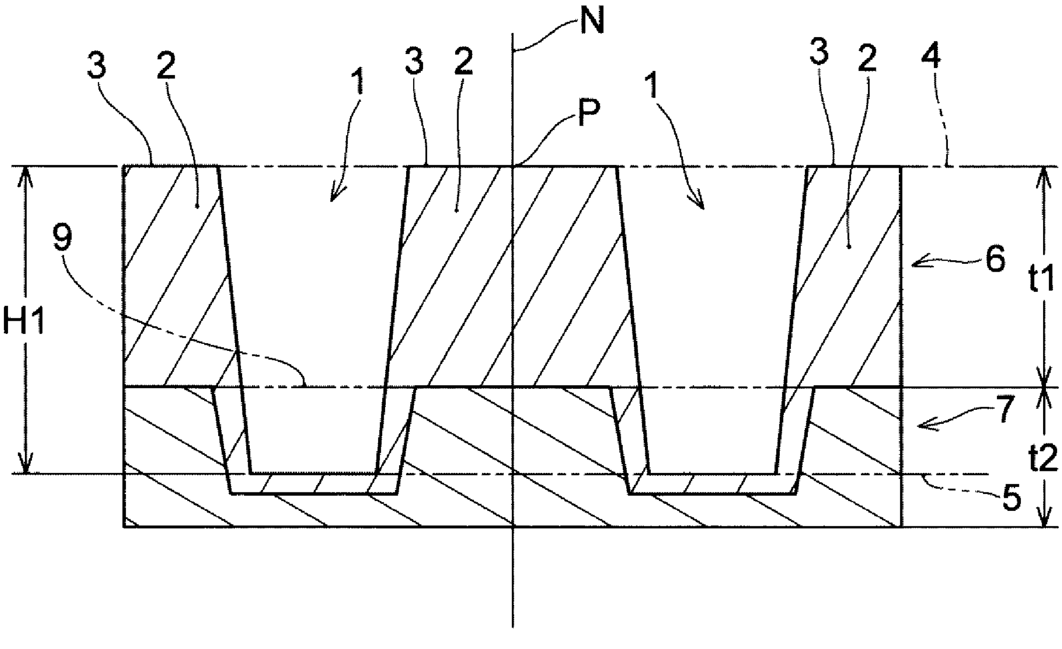

Fig. 5

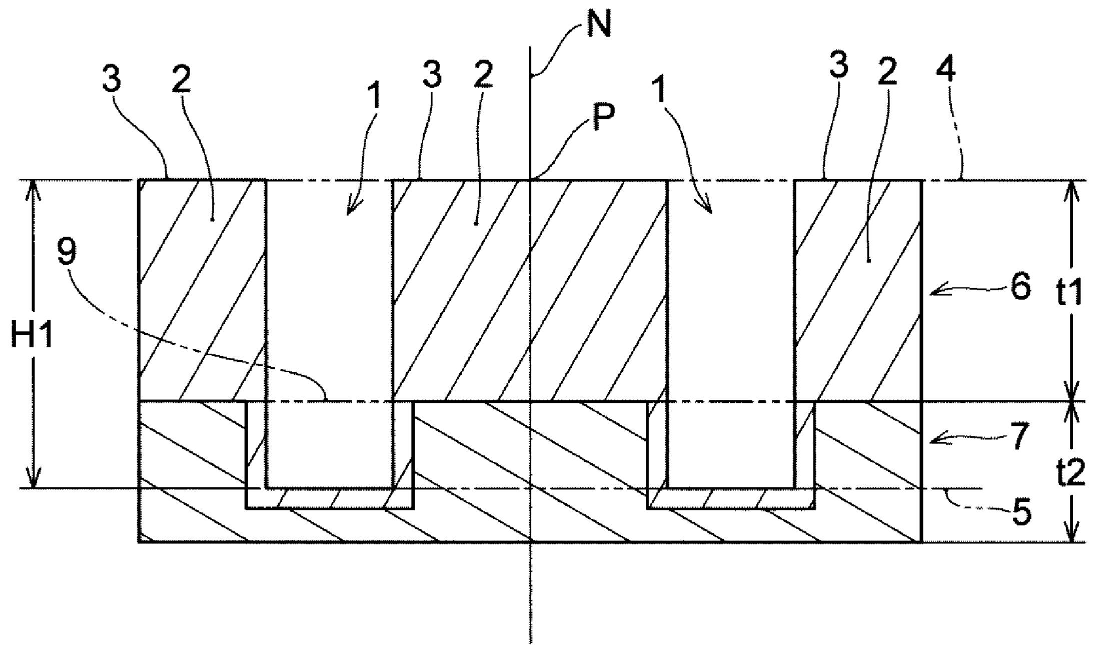


Fig. 6

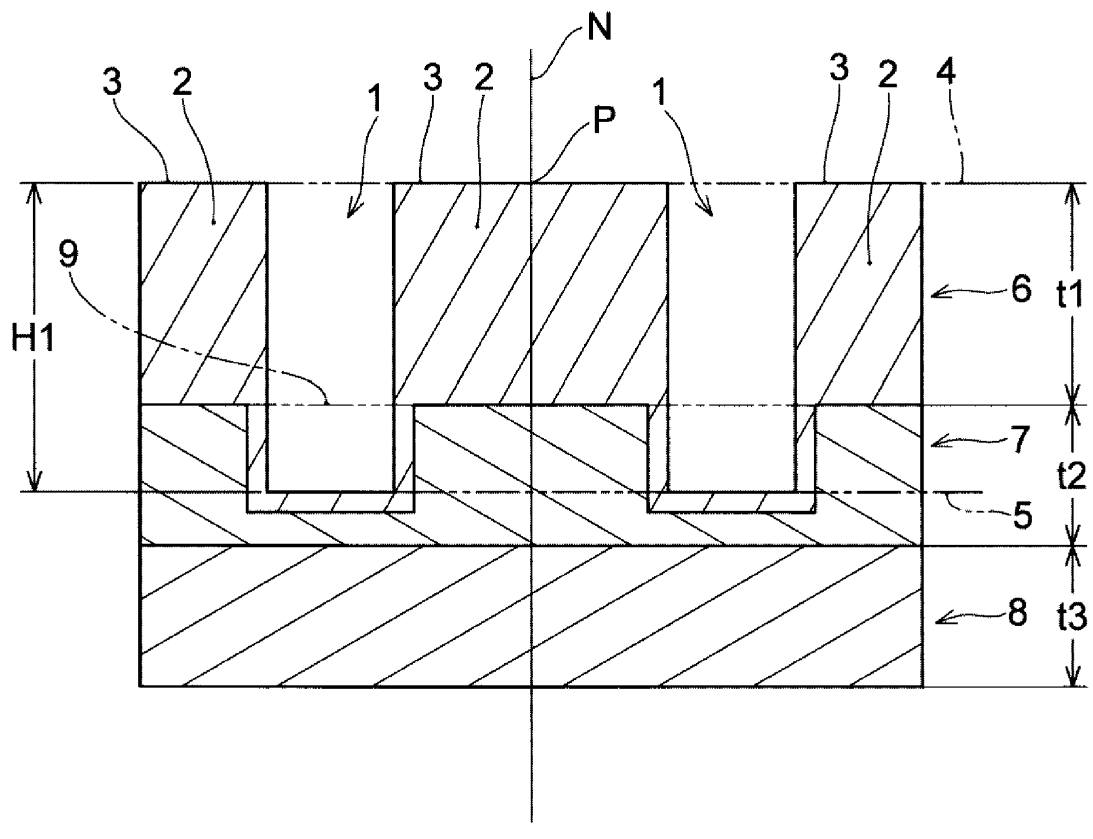

# Fig. 7

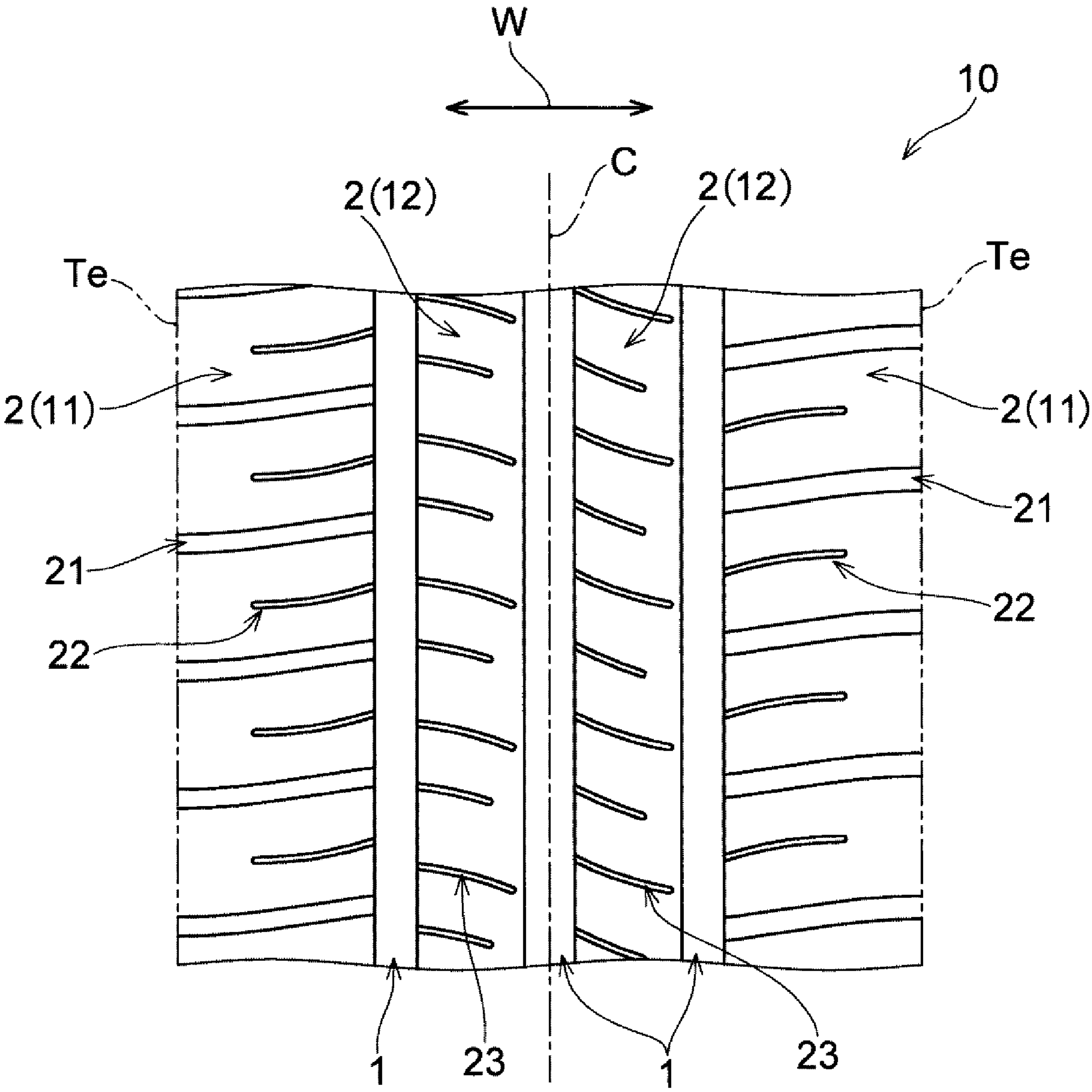

Fig. 8

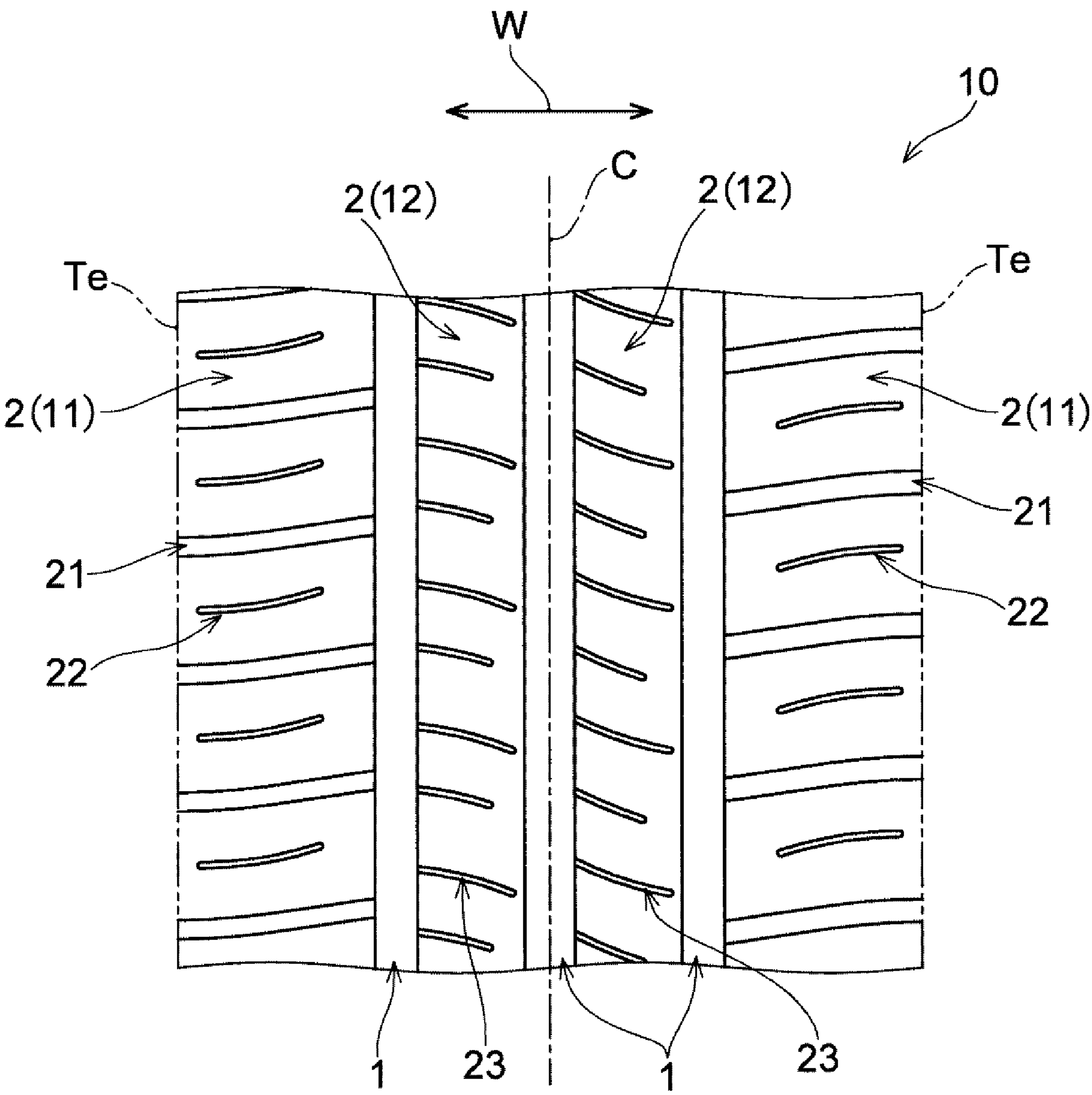

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3213127 B
- EP 2698262 A1
- JP 2005035404 A
- JP 2016037263 A
- EP 3181376 A1
- EP 2781373 A1
- EP 3300923 A1